# EUROPEAN PATENT APPLICATION

(11) **EP 3 668 229 A1**
(43) Date of publication of application: **17.06.2020**
(21) Application number: 18854066.0
(22) Date of filing: 11.09.2018
(51) Int. Cl.: H04W 72/04

(54) **CONTROL INFORMATION SENDING METHOD, RECEIVING METHOD, SENDING DEVICE, AND RECEIVING DEVICE**

(30) Priority: 11.09.2017 CN 201710814530
(71) Applicant: Huawei Technologies Co., Ltd., Longgang District Shenzhen, Guangdong 518129 (CN)
(72) Inventor: ZHANG, Lei, Shenzhen Guangdong 518129 (CN); LYU, Yongxia, Shenzhen Guangdong 518129 (CN)
(74) Representative: Pfenning, Meinig & Partner mbB
(86) International application number: PCT/CN2018/105052
(87) International publication number: WO 2019/047975

(57) **Abstract**

This application relates to the field of communication technologies, and provides a method for sending control information, a method for receiving control information, a sending device, and a receiving device, to resolve a problem about how to achieve a balance between high-quality transmission of URLLC service data and another service in the prior art, including: determining, by a sending device, control information, where a resource set corresponding to the control information overlaps a first time-frequency resource, and when a type of the control information is a first control information type, the first time-frequency resource can be used to bear the control information; or when a type of the control information is a first control information type, a search space corresponding to the control information overlaps a first time-frequency resource; or the control information is used to indicate that a receiving device receives data on a second time-frequency resource, where the second time-frequency resource overlaps the first time-frequency resource, and the control information is further used to indicate that the first time-frequency resource bears the data; and sending, by the sending device, the control information to the receiving device.

## Description

This application claims priority to Chinese Patent Application No. 201710814530.3, filed with the Chinese Patent Office on September 11, 2017 and entitled "METHOD FOR SENDING CONTROL INFORMATION, METHOD FOR RECEIVING CONTROL INFORMATION, SENDING DEVICE, AND RECEIVING DEVICE", which is incorporated herein by reference in its entirety.

### TECHNICAL FIELD

This application relates to the field of communications technologies, and in particular, to a method for sending control information, a method for receiving control information, a sending device, and a receiving device.

### BACKGROUND

The fifth-generation (the fifth generation, 5G) mobile communications system emerges as the times require, to deal with explosive growth of mobile data traffic, massive mobile communications device connections, various emerging new services and application scenarios in the future. The International Telecommunication Union (International Telecommunication Union, ITU) defines an ultra-reliable and low latency communications (Ultra Reliable and Low Latency Communications, URLLC) service scenario for 5G and mobile communications systems in the future.

Different services have different requirements for a mobile communications system. How to better simultaneously support data transmission requirements of a plurality of different services is a technical problem that a current 5G mobile communications system needs to resolve. For example, how to simultaneously support a URLLC service and another service is one of the discussion hotspots of the current 5G mobile communications system.

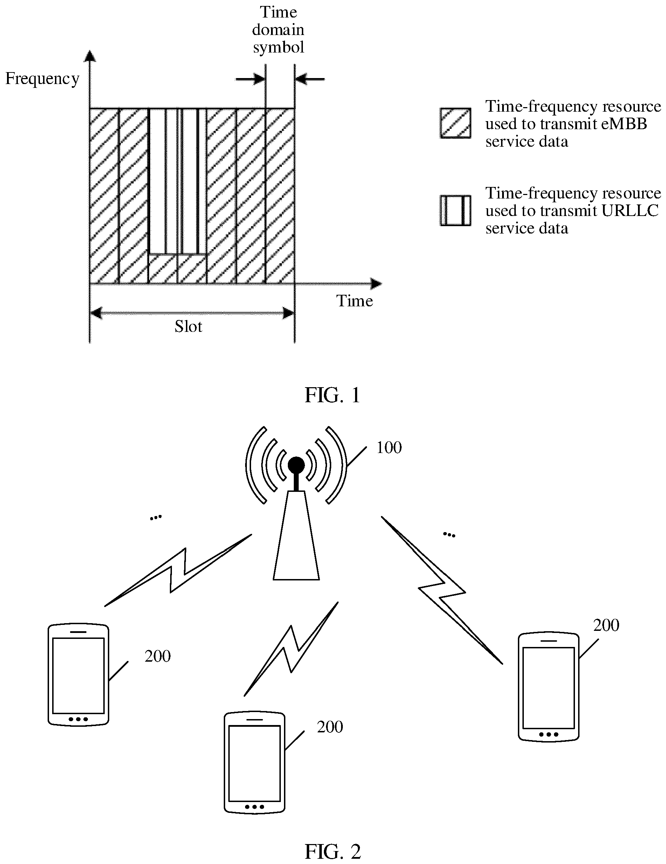

Because of burstiness of URLLC service data, to improve utilization of system resources, an access network device usually does not reserve a resource for downlink data transmission of a URLLC service. When URLLC service data arrives at the access network device, if in this case, there is no idle time-frequency resource, and the URLLC service data is scheduled after transmission of service data that has been scheduled is completed, a transmission latency of the URLLC service data is longer. Consequently, an ultra-short latency requirement of the URLLC service cannot be satisfied. Therefore, the access network device may transmit the URLLC service data in a preemption (preemption) manner shown in FIG. 1. The preemption herein means that the access network device selects, from a time-frequency resource that has been allocated and that is used to transmit other data, a part or all of the time-frequency resource to transmit the URLLC service data. That is, the access network device does not send other service data on a time-frequency resource used to transmit the URLLC service data.

In addition, some resources in the time-frequency resource used to transmit the other data may alternatively be used to transmit another signal, or the resources may be reserved by the access network device for other use. When the access network device schedules transmission of the URLLC service data, to implement efficient transmission of the URLLC service data, whether the resource needs to be occupied or avoided in the transmission of the URLLC service data, to achieve a balance between high-quality transmission of the URLLC service data and another service, is a problem that urgently needs to be resolved.

### SUMMARY

This application provides a method for sending control information, a method for receiving control information, a sending device, and a receiving device, to resolve a problem about how to achieve a balance between high-quality transmission of the URLLC service data and another service in the prior art.

To resolve the foregoing problem, this application provides the following technical solutions:
According to a first aspect, this application provides a method for sending control information, including: determining, by a sending device, control information; and sending, by the sending device, the control information to the receiving device, where a resource set (that is, locations at which the control information can appear) corresponding to the control information overlaps a first time-frequency resource, and when a type of the control information is a first control information type, the first time-frequency resource can be used to bear the control information; or when a type of the control information is a first control information type, a search space (that is, some time-frequency resources that are agreed by the receiving device and the sending device in advance and that may be used to bear the control information, where a time-frequency resource group including the time-frequency resources that may bear the control information is referred to as a search space) corresponding to the control information overlaps a first time-frequency resource; or the control information is used to indicate that a receiving device receives data on a second time-frequency resource (the second time-frequency resource is a time-frequency resource on which the receiving device may receive downlink data), where the second time-frequency resource overlaps the first time-frequency resource, and the control information is further used to indicate that the first time-frequency resource bears the data.

An embodiment of this application provides the method for sending control information. Before detecting the control information, the receiving device does not know whether there is sent control information, and which time-frequency resource bears the control information when the sending device sends the control information to the receiving device. Therefore, in this application, the sending device sends the control information to the receiving device, and when the resource set corresponding to the control information overlaps the first time-frequency resource, indicates, by using the type of the control information (for example, the first control information type), to the receiving device that the first time-frequency resource can bear the control information. In this way, the receiving device can determine to look for or search for control information corresponding to the receiving device on the first time-frequency resource, to avoid looking for the control information on a plurality of time-frequency resources that may bear the control information. Second, the receiving device indicates, by using the control information, to the sending device whether the first time-frequency resource bears the data. In this way, after receiving the control information, the receiving device may receive the data on the first time-frequency resource based on the indication of the control information.

With reference to the first aspect, in a first possible implementation of the first aspect, before the determining, by a sending device, control information, the method provided in this embodiment of this application further includes: sending, by the sending device, first information to the receiving device, where the first information is used to indicate that the first time-frequency resource is a reserved resource, or the first information is used to indicate that the first time-frequency resource cannot be used to bear a signal, or the first information is used to indicate that the first time-frequency resource does not need to be used to bear a signal sent to the receiving device, or the first information is used to indicate that the first time- that the first time-frequency resource does not need to be used to bear at least one of the data and the control information that are sent to the receiving device. The reserved resource is indicated to the receiving device, or the first information is that the first time-frequency resource cannot be used to bear the signal, or the first information is that the first time-frequency resource does not need to be used to bear the signal sent to the receiving device, or the first information is that the first time-frequency resource does not need to be used to bear at least one of the data and the control information that are sent to the receiving device. In this way, the receiving device determines that the first time-frequency resource needs to be avoided. Therefore, after sequentially receiving the control information, the receiving device may determine, based on a condition satisfied by the control information, whether the first time-frequency resource bears the data or the signal, to determine whether the first time-frequency resource needs to be occupied or avoided. It may be understood that before the sending device sends first information to the receiving device or while the sending device sends first control information, the sending device configures the first time-frequency resource to the receiving device by using at least one of Radio Resource Control (Radio Resource Control, RRC) signaling, Medium Access Control (Medium Access Control, MAC) signaling, and physical control signaling. For an implementation of the signaling in the possible design, refer to the foregoing description. Details are not described herein again.

With reference to the first aspect or the first possible implementation of the first aspect, in a second possible implementation of the first aspect, the method provided in this application further includes: that the resource set corresponding to the control information overlaps the first time-frequency resource, and when the type of the control information is a second control information type, that the first time-frequency resource cannot be used to bear the control information; or when the type of the control information is a second control information type, that the search space corresponding to the control information does not overlap the first time-frequency resource. When the resource set corresponding to the control information overlaps the first time-frequency resource, that the type of the control information is the second control information type is used to indicate to the receiving device that the first time-frequency resource cannot be used to bear the control information. In this way, the receiving device may search for the control information on a time-frequency resource in the resource set corresponding to the control information other than the first time-frequency resource. In addition, that the type of the control information is the second control information type is used to indicate to the receiving device that the search space corresponding to the control information does not overlap the first time-frequency resource. In this way, the receiving device may know that the first time-frequency resource does not bear the control information, and determine a location of a time-frequency resource that specifically bears the control information and that is in the search space corresponding to the control information.

With reference to any one of the first aspect to the second possible implementation of the first aspect, in a third possible implementation of the first aspect, that the control information is further used to indicate that the first time-frequency resource bears the data includes: that the control information includes indication information, where the indication information is used to indicate that the first time-frequency resource bears the data; or that the control information implicitly indicates that the first time-frequency resource bears the data; or that the control information indicates, by indicating the second time-frequency resource based on a first time domain unit, to the receiving device that the first time-frequency resource bears the data; or that the control information indicates that the data is of a first data type, where the first data type is used to indicate that the first time-frequency resource bears the data. The control information indicates that the data is of the first data type, and the first time-frequency resource bears the data; or that the control information is first-type control information, and the first time-frequency resource bears the data. The sending device indicates to the receiving device that the first time-frequency resource bears the data in a manner in which the control information carries the indication information. In this way, after receiving the control information, the receiving device can accurately determine whether the first time-frequency resource bears the data. The sending device explicitly indicates, by using the control information, to the receiving device that the first time-frequency resource bears the data, so that adding an indication field to the control information is prevented, and signaling overheads can be reduced.

With reference to any one of the first aspect to the third possible implementation of the first aspect, in a fourth possible implementation of the first aspect, that the control information in this application is further used to indicate that the first time-frequency resource does not bear the data includes: when the second time-frequency resource is indicated based on a first time domain unit, determining, by the receiving device, that the first time-frequency resource bears the data; or when the data is of a first data type, determining, by the receiving device, that the first time-frequency resource bears the data; or when the control information is first-type control information, determining, by the receiving device, that the first time-frequency resource bears the data. The sending device indicates to the receiving device that the first time-frequency resource does not bear the data in a manner in which the control information carries the indication information. In this way, after receiving the control information, the receiving device can accurately determine whether the first time-frequency resource bears the data. The sending device explicitly indicates, by using the control information, to the receiving device that the first time-frequency resource does not bear the data, so that adding an indication field to the control information is prevented, and signaling overheads can be reduced.

With reference to any one of the first aspect to the fourth possible implementation of the first aspect, in a fifth possible implementation of the first aspect, the first data type and a second data type are determined based on at least one of the following factors, including: target transmission reliability of the data, a target transmission latency of the data, or a service type (such as an eMBB service or a URLLC service) of the data. Target transmission reliability, transmission latencies, and service types corresponding to different data are all different. Therefore, a data type of data may be determined more accurately by using at least one of the foregoing factors. In addition, when two or more pieces of data have a same factor, a specific data type of each piece of data may be further determined by using a factor, other than the same factor, of at least one of the two or more pieces of data, so that reliability of determining whether the first time-frequency resource bears the data is improved.

With reference to any one of the first aspect to the fifth possible implementation of the first aspect, in a sixth possible implementation of the first aspect, the first control information type and the second control information type are determined based on at least one of the following factors, including: a format of the control information, a time-frequency resource location of the control information, or a monitoring period type corresponding to the control information. Formats, time-frequency resource locations, and monitoring period types corresponding to different types of control information are all different. Therefore, a type of each piece of control information is determined accurately by using one factor or a combination of a plurality of factors in at least one of the foregoing factors.

With reference to any one of the first aspect to the sixth possible implementation of the first aspect, in a seventh possible implementation of the first aspect, the control information is further used to indicate that the first time-frequency resource does not bear at least one of the data and the control information.

With reference to any one of the first aspect to the seventh possible implementation of the first aspect, in an eighth possible implementation of the first aspect, the first time-frequency resource bears a zero power signal; or the first time-frequency resource bears a reference signal sent to the receiving device.

With reference to any one of the first aspect to the eighth possible implementation of the first aspect, in a ninth possible implementation of the first aspect, the search space corresponding to the control information overlaps the first time-frequency resource, and the first time-frequency resource can be used to bear the control information.

With reference to any one of the first aspect to the eighth possible implementation of the first aspect, in a ninth possible implementation of the first aspect, the search space corresponding to the control information does not overlap the first time-frequency resource, and the first time-frequency resource cannot be used to bear the control information.

With reference to any one of the first aspect to the ninth possible implementation of the first aspect, in a tenth possible implementation of the first aspect, before the sending, by the sending device, the control information to the receiving device, the method provided in this application further includes: determining, by the sending device, a time-frequency resource of the control information based on the first control information type.

With reference to any one of the first aspect to the tenth possible implementation of the first aspect, in an eleventh possible implementation of the first aspect, the sending device sends the data to the receiving device on the second time-frequency resource.

With reference to any one of the first aspect to the eleventh possible implementation of the first aspect, in a twelfth possible implementation of the first aspect, the control information is further used to indicate that the receiving device sends uplink data on a third time-frequency resource.

Correspondingly, according to a second aspect, an embodiment of this application provides a communications apparatus. The communications apparatus may be an apparatus for sending control information. The communications apparatus may implement the method for sending control information descried in the first aspect or any one of possible implementations of the first aspect, and therefore, may achieve beneficial effects in the first aspect or any one of possible implementations in the first aspect. The communications apparatus may be a sending device, or may be a chip applied to a sending device, and the sending device may be a base station. The communications apparatus may implement the foregoing method by using software, hardware, or hardware executing corresponding software.

In a possible design, the communications apparatus may include: a determining unit, configured to determine control information; and a sending unit, configured to send the control information to the receiving device, where a resource set (that is, locations at which the control information can appear) corresponding to the control information overlaps a first time-frequency resource, and when a type of the control information is a first control information type, the first time-frequency resource can be used to bear the control information; or when a type of the control information is a first control information type, a search space (that is, some time-frequency resources that are agreed by the receiving device and the communications apparatus in advance and that may be used to bear the control information, where a time-frequency resource group including the time-frequency resources that may bear the control information is referred to as a search space) corresponding to the control information overlaps a first time-frequency resource; or the control information is used to indicate that the receiving device receives data on a second time-frequency resource (the second time-frequency resource is a time-frequency resource on which the receiving device can receive downlink data), where the second time-frequency resource overlaps the first time-frequency resource, and the control information is further used to indicate that the first time-frequency resource bears the data.

With reference to the second aspect, in a first possible implementation of the second aspect, the sending unit is further configured to send first information to the receiving device, where the first information is used to indicate that the first time-frequency resource is a reserved resource, or the first information is used to indicate that the first time-frequency resource cannot be used to bear a signal, or the first information is used to indicate that the first time-frequency resource does not need to be used to bear a signal sent to the receiving device, or the first information is used to indicate that the first time-frequency resource does not need to be used to bear at least one of the data and the control information that are sent to the receiving device. The reserved resource is indicated to the receiving device, or the first information is used to indicate that the first time-frequency resource cannot be used to bear a signal, or the first information is used to indicate that the first time-frequency resource does not need to be used to bear a signal sent to the receiving device, or the first information is used to indicate that the first time-frequency resource does not need to be used to bear at least one of the data and the control information that are sent to the receiving device.

With reference to the second aspect or the first possible implementation of the second aspect, in a second possible implementation of the second aspect, the resource set corresponding to the control information overlaps the first time-frequency resource, and when the type of the control information is a second control information type, the first time-frequency resource cannot be used to bear the control information; or when the type of the control information is a second control information type, the search space corresponding to the control information does not overlap the first time-frequency resource.

With reference to any one of the second aspect to the second possible implementation of the second aspect, in a third possible implementation of the second aspect, that the control information is further used to indicate that the first time-frequency resource bears the data includes: that the control information includes indication information, where the indication information is used to indicate that the first time-frequency resource bears the data; or that the control information implicitly indicates that the first time-frequency resource bears the data; or that the control information indicates, by indicating the second time-frequency resource based on a first time domain unit, to the receiving device that the first time-frequency resource bears the data; or that the control information indicates that the data is of a first data type, where the first data type is used to indicate that the first time-frequency resource bears the data. The control information indicates that the data is of the first data type, and the first time-frequency resource bears the data; or that the control information is first-type control information, and the first time-frequency resource bears the data. The sending device indicates to the receiving device that the first time-frequency resource bears the data in a manner in which the control information carries the indication information. In this way, after receiving the control information, the receiving device can accurately determine whether the first time-frequency resource bears the data. The sending device explicitly indicates, by using the control information, to the receiving device that the first time-frequency resource bears the data, so that adding an indication field to the control information is prevented, and signaling overheads can be reduced.

With reference to any one of the second aspect to the third possible implementation of the second aspect, in a fourth possible implementation of the second aspect, that the control information in this application is further used to indicate that the first time-frequency resource does not bear the data includes: when the second time-frequency resource is indicated based on a first time domain unit, determining, by the receiving device, that the first time-frequency resource bears the data; or when the data is of a first data type, determining, by the receiving device, that the first time-frequency resource bears the data; or when the control information is first-type control information, determining, by the receiving device, that the first time-frequency resource bears the data. The sending device indicates to the receiving device that the first time-frequency resource does not bear the data in a manner in which the control information carries the indication information. In this way, after receiving the control information, the receiving device can accurately determine whether the first time-frequency resource bears the data. The sending device explicitly indicates, by using the control information, to the receiving device that the first time-frequency resource does not bear the data, so that adding an indication field to the control information is prevented, and signaling overheads can be reduced.

With reference to any one of the second aspect to the fourth possible implementation of the second aspect, in a fifth possible implementation of the second aspect, the first data type and a second data type are determined based on at least one of the following factors, including: target transmission reliability of the data, a target transmission latency of the data, or a service type (such as an eMBB service or a URLLC service) of the data.

With reference to any one of the second aspect to the fifth possible implementation of the second aspect, in a sixth possible implementation of the second aspect, the first control information type and the second control information type are determined based on at least one of the following factors, including: a format of the control information, a time-frequency resource location of the control information, or a monitoring period type corresponding to the control information. Formats, time-frequency resource locations, or monitoring period types corresponding to different types of control information are all different. Therefore, a type of each piece of control information is determined accurately by using one factor or a combination of a plurality of factors in at least one of the foregoing factors.

With reference to any one of the second aspect to the sixth possible implementation of the second aspect, in a seventh possible implementation of the second aspect, the control information is further used to indicate that the first time-frequency resource does not bear at least one of the data and the control information.

With reference to any one of the second aspect to the seventh possible implementation of the second aspect, in an eighth possible implementation of the second aspect, the first time-frequency resource bears a zero power signal; or the first time-frequency resource bears a reference signal sent to the receiving device.

With reference to any one of the second aspect to the eighth possible implementation of the second aspect, in a ninth possible implementation of the second aspect, the search space corresponding to the control information overlaps the first time-frequency resource, and the first time-frequency resource can be used to bear the control information.

Alternatively, with reference to any one of the second aspect to the eighth possible implementation of the second aspect, in a ninth possible implementation of the second aspect, the search space corresponding to the control information does not overlap the first time-frequency resource, and the first time-frequency resource cannot be used to bear the control information.

With reference to any one of the second aspect to the ninth possible implementation of the second aspect, in a tenth possible implementation of the second aspect, the determining unit is further configured to: before the sending unit sends the control information to the receiving device, determine a time-frequency resource of the control information based on the first control information type.

With reference to any one of the second aspect to the tenth possible implementation of the second aspect, in an eleventh possible implementation of the second aspect, the communications apparatus provided in this embodiment of this application further includes: a receiving unit, configured to receive the data sent to the receiving device on the second time-frequency resource.

With reference to any one of the second aspect to the eleventh possible implementation of the second aspect, in a twelfth possible implementation of the second aspect, the control information is further used to indicate that the receiving device sends uplink data on a third time-frequency resource.

In another possible design, an embodiment of this application further provides a communications apparatus. The communications apparatus may be a sending device or a chip applied to a sending device. The communications apparatus includes: a processor and a communications interface (which may also be referred to as an interface circuit or a transceiver), where the communications interface is configured to support the communications apparatus in performing message/data receiving and sending steps on a side of the communications apparatus that are described in the first aspect to any one of possible implementations of the first aspect. The processor is configured to support the communications apparatus in performing the message/data processing steps on the side of the communications apparatus that are described in the first aspect to any one of possible implementations in the first aspect. For specific corresponding steps, refer to descriptions in the first aspect to any one of possible implementations of the first aspect. Details are not described in this embodiment of this application again. For example, the processor is configured to perform steps performed by the foregoing determining unit, and the communications interface is configured to perform steps performed by the sending unit and the receiving unit.

Optionally, the communications interface of the communications apparatus and the processor are coupled to each other.

Optionally, the communications apparatus may further include a memory configured to store code and data, where the processor, the interface circuit, and the memory are coupled to each other.

According to a third aspect, an embodiment of this application provides a method for receiving control information, including: receiving, by a receiving device, control information from a sending device, where when a type of the control information is a first control information type, the receiving device determines that a first time-frequency resource can be used to bear the control information, where a resource set corresponding to the control information overlaps the first time-frequency resource; or when a type of the control information is a first control information type, the receiving device determines that a search space corresponding to the control information overlaps a first time-frequency resource; or the control information is used to indicate that the receiving device receives data on a second time-frequency resource, where the second time-frequency resource overlaps the first time-frequency resource, the control information is further used to indicate that the first time-frequency resource bears the data, and the receiving device receives data on the second time-frequency resource.

In a possible design, before the receiving, by a receiving device, control information from a sending device, the method provided in this application further includes: receiving, by the receiving device, first information from the sending device, where the first information is used to indicate that the first time-frequency resource is a reserved resource, or the first information is used to indicate that the first time-frequency resource cannot be used to bear a signal, or the first information is used to indicate that the first time-frequency resource does not need to be used to bear a signal sent to the receiving device, or the first information is used to indicate that the first time-frequency resource does not need to be used to bear at least one of the data and the control information that are sent to the receiving device.

In a possible design, before the receiving, by a receiving device, control information from a sending device, the method provided in this application further includes: when the type of the control information is a second control information type, the receiving device determines that the first time-frequency resource cannot be used to bear the control information, where the resource set corresponding to the control information overlaps the first time-frequency resource; or when the type of the control information is a second control information type, the receiving device determines that the search space corresponding to the control information does not overlap the first time-frequency resource.

In a possible design, that the control information is further used to indicate that the first time-frequency resource bears the data includes: that the control information includes indication information, where the indication information is used to indicate that the first time-frequency resource bears the data; or that the control information implicitly indicates that the first time-frequency resource bears the data; or that the control information determines, by determining the second time-frequency resource based on a first time domain unit, that the first time-frequency resource bears the data.

In a possible design, the method provided in this application further includes: when the control information indicates that the data is of a first data type, determining, by the receiving device, that the first time-frequency resource bears the data, where the first data type is used to indicate that the first time-frequency resource bears the data; or when the data is of the first data type, determining, by the receiving device, that the first time-frequency resource bears the data; or when the second time-frequency resource is indicated based on the first time domain unit, determining, by the receiving device, that the first time-frequency resource bears the data; or when the control information is first-type control information, determining, by the receiving device, that the first time-frequency resource bears the data.

In a possible design, the first data type is determined based on at least one of the following factors, including: target transmission reliability of the data, a target transmission latency of the data, or a service type of the data.

In a possible design, the first control information type is determined based on at least one of the following factors, including: a format of the control information, a time-frequency resource location of the control information, or a monitoring period type corresponding to the control information.

In a possible design, the control information is further used to indicate that the first time-frequency resource does not bear at least one of the data and the control information.

In a possible design, the first time-frequency resource bears a zero power signal; or the first time-frequency resource bears a reference signal sent to the receiving device.

In a possible design, when the type of the control information is the first control information type, the receiving device determines that the search space corresponding to the control information overlaps the first time-frequency resource, and further determines that the first time-frequency resource can be used to bear the control information.

In a possible design, before or during the receiving, by a receiving device, control information from a sending device, the method provided in this embodiment of this application further includes: when the control information is the first-type control information, determining, by the receiving device, a time-frequency resource included in the search space corresponding to the control information.

In a possible design, before the receiving, by a receiving device, control information from a sending device, the method provided in this application further includes: determining, by the receiving device, that the control information is the first control information type and the resource set overlaps the first time-frequency resource, and determining, by the receiving device, that the first time-frequency resource can be used to bear the control information or cannot bear the control information.

In a possible design, the receiving device receives the data on the second time-frequency resource.

In a possible design, the control information is further used to indicate that the receiving device sends uplink data on a third time-frequency resource, and the method provided in this application further includes: sending, by the receiving device, uplink data to the sending device on the third time-frequency resource.

Correspondingly, this application further provides a communications apparatus, for example, an apparatus for receiving control information, and the communications apparatus may implement the method described in the third aspect or any one of possible implementations of the third aspect. For example, the communications apparatus may be a receiving device, for example, a terminal device or a chip disposed inside a terminal device. The communications apparatus may implement the foregoing method by using software, hardware, or hardware executing corresponding software.

In a possible design, the communications apparatus may include a processor and a memory. The processor is configured to support the communications apparatus in implementing corresponding functions in the method described in the foregoing third aspect or any one of possible implementations of the third aspect. The memory is configured to couple to the processor, and the memory stores a program (an instruction) and data that are both necessary to the apparatus. In addition, the apparatus may further include a communications interface configured to support communication between the apparatus and another network element. The communications interface may be a transceiver.

According to a fourth aspect, an embodiment of this application provides a communications apparatus, including: a receiving unit, configured to receive control information from a sending device, and the communications apparatus further includes a determining unit, configured for that: when a type of the control information is a first control information type, the communications apparatus determines that a first time-frequency resource can be used to bear the control information, where a resource set corresponding to the control information overlaps the first time-frequency resource; or the communications apparatus further includes a determining unit, configured to: when the type of the control information is the first control information type, determine that a search space corresponding to the control information overlaps a first time-frequency resource; or the control information is used to indicate that the communications apparatus receives data on a second time-frequency resource, where the second time-frequency resource overlaps the first time-frequency resource, the control information is further used to indicate that the first time-frequency resource bears the data, and the receiving unit is further configured to receive the data on the second time-frequency resource.

In a possible design, the receiving unit is further configured to receive first information from the sending device, where the first information is used to indicate that the first time-frequency resource is a reserved resource; or the first information is used to indicate that the first time-frequency resource cannot be used to bear a signal; or the first information is used to indicate that the first time-frequency resource does not need to be used to bear a signal sent to the communications apparatus, or the first information is used to indicate that the first time-frequency resource does not need to be used to bear at least one of the data and the control information that are sent to the communications apparatus.

In a possible design, the communications apparatus further includes: a determining unit, configured to: when the type of the control information is a second control information type, determine that the first time-frequency resource cannot be used to bear the control information, where the resource set corresponding to the control information overlaps the first time-frequency resource; or when the type of the control information is a second control information type, determine that the search space corresponding to the control information does not overlap the first time-frequency resource.

In a possible design, that the control information is further used to indicate that the first time-frequency resource bears the data includes: that the control information includes indication information, where the indication information is used to indicate that the first time-frequency resource bears the data; or that the control information implicitly indicates that the first time-frequency resource bears the data; or that the control information determines, by determining the second time-frequency resource based on a first time domain unit, that the first time-frequency resource bears the data.

In a possible design, when the control information indicates that the data is of a first data type, the determining unit is further configured to determine that the first time-frequency resource bears the data, where the first data type is used to indicate that the first time-frequency resource bears the data; or when the data is of a first data type, the determining unit is further configured to determine that the first time-frequency resource bears the data; or when the second time-frequency resource is indicated based on the first time domain unit, and the second time-frequency resource is indicated based on the first time domain unit, the determining unit is further configured to determine that the first time-frequency resource bears the data; or when the control information is first-type control information, the determining unit is further configured to determine that the first time-frequency resource bears the data.

In a possible design, the first data type is determined based on at least one of the following factors, including: target transmission reliability of the data, a target transmission latency of the data, or a service type of the data.

In a possible design, the first control information type is determined based on at least one of the following factors, including: a format of the control information, a time-frequency resource location of the control information, or a monitoring period type corresponding to the control information.

In a possible design, the control information is further used to indicate that the first time-frequency resource does not bear at least one of the data and the control information.

In a possible design, the first time-frequency resource bears a zero power signal; or the first time-frequency resource bears a reference signal sent to the communications apparatus.

In a possible design, the determining unit is further configured to: when the type of the control information is the first control information type, determine that the search space corresponding to the control information overlaps the first time-frequency resource, and further determine that the first time-frequency resource can be used to bear the control information.

In a possible design, the determining unit is specifically configured to determine that the control information is the first control information type, and determine a time-frequency resource included in the search space corresponding to the control information.

In a possible design, the determining unit is further configured to determine that the control information is the first control information type and the resource set overlaps the first time-frequency resource, and determine that the first time-frequency resource can be used to bear the control information or cannot bear the control information.

In a possible design, the receiving unit is further configured to receive the data on the second time-frequency resource.

In a possible design, the control information is further used to indicate that the communications apparatus sends uplink data on a third time-frequency resource, and the communications apparatus further includes: a sending unit, configured to send the uplink data to the sending device on the third time-frequency resource.

In another possible design, an embodiment of this application further provides a communications apparatus. The communications apparatus may be a sending device or a chip applied to a sending device. The communications apparatus includes: a processor and a communications interface (which may also be referred to as an interface circuit or a transceiver), where the communications interface is configured to support the communications apparatus in performing message/data receiving and sending steps on a side of the communications apparatus that are described in the third aspect to any one of possible implementations in the third aspect. The processor is configured to support the communications apparatus in performing message/data processing steps on the side of the communications apparatus that are described in the third aspect to any one of possible implementations in the third aspect. For specific corresponding steps, refer to descriptions in the third aspect to any one of possible implementations in the third aspect. Details are not described in this embodiment of this application again. For example, the processor is configured to perform steps performed by the foregoing determining unit, and the communications interface is configured to perform steps performed by the sending unit and the receiving unit.

Optionally, the communications interface of the communications apparatus and the processor are coupled to each other.

Optionally, the communications apparatus may further include a memory configured to store code and data, where the processor, the interface circuit, and the memory are coupled to each other.

According to a fifth aspect, a computer storage medium is provided. An instruction is stored in the computer-readable storage medium, and when run on a computer, the instruction enables the computer to perform the method according to the second aspect or any possible design of the second aspect.

According to a sixth aspect, a computer storage medium is provided. An instruction is stored in the computer-readable storage medium, and when run on a computer, the instruction enables the computer to perform the method according to the third aspect or any possible design of the third aspect.

According to a seventh aspect, a computer program product including an instruction is provided. The instruction is stored in the computer program product, and when run on a computer, the instruction enables the computer to perform the method according to the second aspect or any possible design of the second aspect.

According to an eighth aspect, a computer program product including an instruction is provided. The instruction is stored in the computer program product, and when run on a computer, the instruction enables the computer to perform the method according to the third aspect or any possible design of the third aspect.

According to a ninth aspect, an embodiment of this application provides a communications system, including the sending device described in the second aspect to any one of possible implementations of the second aspect, and the receiving device described in the fourth aspect to any one of possible implementations of the fourth aspect.

According to a tenth aspect, an embodiment of this application provides a chip, including: a processor and an interface circuit, where the interface circuit is coupled to the processor, and the processor is configured to run a computer program or an instruction, to implement message/data processing steps on a sending device side that are described in the first aspect and any one of possible implementations of the first aspect. The interface circuit is configured to implement message/data sending and receiving steps on the sending device side that are described in the first aspect and any one of possible implementations of the first aspect. The interface circuit is configured to communicate with a module other than the chip.

According to an eleventh aspect, an embodiment of this application provides a chip, including: a processor and an interface circuit, where the interface circuit is coupled to the processor, and the processor is configured to run a computer program or an instruction, to implement message/data processing steps on a receiving device side that are described in the third aspect and any one of possible implementations of the third aspect. The interface circuit is configured to implement message/data sending and receiving steps in the receiving device side that are described in the third aspect and any one of possible implementations of the third aspect. The interface circuit is configured to communicate with a module other than the chip.

Any apparatus or computer storage medium or computer program product or chip or communications system provided above is used for performing the corresponding methods provided above. Therefore, for beneficial effects that can be achieved by the apparatus or computer storage medium or computer program product or chip or communications system, refer to beneficial effects of the corresponding solutions in the corresponding methods provided above. Details are not described herein again.

### BRIEF DESCRIPTION OF DRAWINGS

FIG. 1 is a schematic diagram of preempting, by URLLC service data, a time-frequency resource of other data according to the prior art;
FIG. 2 is a schematic architectural diagram of a communications system according to an embodiment of this application;
FIG. 3 is a schematic flowchart 1 of a method for sending and receiving control information according to an embodiment of this application;
FIG. 4 is a schematic diagram of a search space corresponding to control information according to an embodiment of this application;
FIG. 5 is a schematic diagram of a case in which a first time-frequency resource overlaps a search space according to an embodiment of this application;
FIG. 6 is a schematic flowchart 2 of a method for sending and receiving control information according to an embodiment of this application;
FIG. 7 is a schematic diagram of a case in which a first time-frequency resource does not overlap a search space according to an embodiment of this application;
FIG. 8 is a schematic flowchart 3 of a method for sending and receiving control information according to an embodiment of this application;
FIG. 9 is a schematic flowchart 4 of a method for sending and receiving control information according to an embodiment of this application;
FIG. 10 is a schematic structural diagram 1 of a sending device according to an embodiment of this application;
FIG. 11 is a schematic structural diagram 2 of a sending device according to an embodiment of this application;
FIG. 12 is a schematic structural diagram 3 of a sending device according to an embodiment of this application;
FIG. 13 is a schematic structural diagram 1 of a receiving device according to an embodiment of this application;
FIG. 14 is a schematic structural diagram 2 of a receiving device according to an embodiment of this application; and
FIG. 15 is a schematic structural diagram 3 of a receiving device according to an embodiment of this application.

### DESCRIPTION OF EMBODIMENTS

It should be noted that, in this application, the wording, such as "example" or "for example", is used to represent giving an example, an illustration, or a description. Any embodiment or design scheme described by using "example" or "for example" in this application should not be explained as being more preferable or more advantageous than another embodiment or design scheme. Exactly, use of the wording, such as "example" or "for example", is intended to present a relative concept in a specific manner.

In this application, "of (English: of)", "relevant (English: corresponding, relevant)" and "corresponding (English: corresponding)" sometimes may be mixed during use. It should be noted that, when a difference thereof is not emphasized, meanings expressed by them are the same.

In this application, "at least one" refers to one or more. "Multiple" refers to two or more than two. "And/or" describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following (items)" or an expression similar thereto refers to any combination of those items, including any combination of a single item or a plurality of items. For example, at least one of a, b, and c may mean: a, b, c, a-b, a-c, b-c, or a-b-c, where a, b, and c may be singular or plural. In addition, for convenience of clear description of the technical solutions in the embodiments of this application, in the embodiments of this application, words, such as "first" and "second", are used to distinguish same objects or similar objects whose functions and effects are basically the same. A person skilled in the art may understand that the words, such as "first" and "second", do not limit a quantity and an execution sequence, and the words, such as "first" and "second", are not limited to be necessarily different. For example, a first time-frequency resource and a second time-frequency resource are merely used to distinguish different time-frequency resources, and are not intended to limit a sequence thereof.

As shown in FIG. 2, FIG. 2 is a schematic architectural diagram of a communications system to which a method for sending control information and a method for receiving control information are applied according to this application, including: at least one sending device 100, and at least one receiving device 200 (FIG. 2 merely shows three receiving devices, and more or less than three receiving devices may be included in actual scenarios).

In the embodiments of this application, each embodiment is described with reference to a sending device and a receiving device. The sending device may be either of a network device and a terminal device, and the receiving device may be the other of the network device and the terminal device. For example, in embodiments of this application, a network device (for example, a base station) is used as an example of the sending device, and a terminal device (for example, user equipment) may be used as an example of the receiving device; or the sending device may be a terminal device (for example, UE), and the receiving device may be a network device (for example, a base station).
(1) A terminal device (a terminal Equipment) is a device providing voice and/or data connectivity for a user. For example, the terminal device is a hand-held device, an in-vehicle device, or the like that has a wireless connection function. The terminal device may also be referred to as: a terminal, user equipment (User Equipment, UE), an access terminal (Access Terminal), a subscriber unit (User Unit), a subscriber station (User Station), a mobile station (Mobile Station), a mobile (Mobile), a remote station (Remote Station), a remote terminal (Remote Terminal), a mobile device (Mobile Equipment), a user terminal (User Terminal), a wireless telecom device (Wireless Telecom Equipment), a user agent (User Agent), user equipment (User Equipment), or a user apparatus. The terminal device may be a station (Station, STA) in a wireless local area network (Wireless Local Area Networks, WLAN), a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, or another processing device connected to a wireless modem, an in-vehicle device, a wearable device, a terminal in a next-generation communications system (for example, a fifth-generation (Fifth-Generation, 5G) communications network), a terminal in a future evolved public land mobile network (Public Land Mobile Network, PLMN) network, or the like. 5G may also be referred to as new radio (New Radio, NR). In a possible application scenario of this application, the terminal device is a terminal that always works on the ground, for example, an in-vehicle device. In this application, for ease of description, a chip deployed on the foregoing device or a chip may also be referred to as a terminal device.

In an example, in this embodiment of this application, the terminal device may alternatively be a wearable device. A wearable device may also be referred to as a wearable intelligent device, and is a general term of wearable devices, such as glasses, gloves, watches, clothes, and shoes, that are developed by applying wearable technologies to intelligent designs of daily wear. A wearable device is a portable device that can be directly worn on a body or integrated into clothes or accessories of a user. A wearable device is not merely a hardware device, but implements powerful functions through software support, data exchanges, and cloud exchanges. A generalized wearable intelligent device includes a full-featured and large-size device that can implement all or some functions without depending on a smartphone, for example, a smart watch or smart glasses, and a device that focuses on only one type of application function and needs to be used together with another device such as a smartphone, for example, various smart bands and smart jewelry for monitoring physical signs.

The network device may be a device configured to communicate with a mobile device. The network device may be an access point (access point, AP) in a WLAN, a base transceiver station (Base Transceiver Station, BTS) in GSM or CDMA, or may be a base station (NodeB, NB) in WCDMA, or may further be an evolved NodeB (evolved Node B, eNB or eNodeB) in LTE, a relay node, an access point, an in-vehicle device, a wearable device, a network device in a future 5G network, a network device in a future evolved PLMN network, or the like.

In addition, in this embodiment of this application, the network device provides a service for a cell, and the terminal device communicates with the network device by using a transmission resource (for example a frequency domain resource, or in other words, a spectrum resource) used by the cell. The cell may be a cell corresponding to the network device (for example, a base station). The cell may belong to a macro base station, or may belong to a base station corresponding to a small cell (small cell). Herein, the small cell may include: a metro cell (Metro cell), a micro cell (Micro cell), a pico cell (Pico cell), a femto cell (Femto cell), and the like, and the small cells have features of small coverage and low transmit power, and are applicable to providing a high-rate data transmission service.

The method and apparatus provided in the embodiments of this application may be applied to a terminal device or a network device. The terminal device or the network device includes a hardware layer, an operating system layer run on the hardware layer, and an application layer run on the operating system layer. The hardware layer includes hardware such as a central processing unit (central processing unit, CPU), a memory management unit (memory management unit, MMU), and a memory (also referred to as a main memory). The operating system may be any one or more computer operating systems, such as a Linux operating system, a Unix operating system, an Android operating system, an iOS operating system, or a Windows operating system, that implement service processing through a process (process). The application layer includes an application such as a browser, an address book, word processing software, and instant messaging software. In addition, in the embodiments of this application, a specific structure of an execution body of the signal transmission method is not particularly limited in the embodiments of this application, provided that communication can be performed according to the signal transmission method in the embodiments of this application by running a program recording code of the signal transmission method in the embodiments of this application. For example, the execution body of the wireless communication method in the embodiments of this application may be a terminal device or a network device, or a functional module that is in a terminal device or a network device and that can invoke a program and execute the program.

In addition, aspects or features in the embodiments of this application may be implemented as a method, an apparatus or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, a key drive, or the like). In addition, various storage media described in this specification may indicate one or more devices and/or other machine-readable media that are both configured to store information. The term "machine-readable media" may include but is not limited to a radio channel and various other media that can store, include, and/or carry an instruction and/or data.

In a current discussion, a common view is that URLLC service data transmission may occupy a resource, for example, a time-frequency resource used by other data and/or another signal. However, it is possible that the other data and/or the another signal is very important, and occupation of the other data and/or the another signal is undesired. Therefore, how the URLLC service data transmission occupies or avoids a resource is a problem that needs to be resolved. It should be noted that the URLLC service data transmission may include control information transmission that schedules the service, data channel transmission that bears the service data, and the like.

For the foregoing problem, the embodiments of this application provide a method for sending control information, a method for receiving control information, a corresponding sending device, and a corresponding receiving device.

The method for sending control information in the embodiments of this application may be performed by a sending device or a communications apparatus (for example, a chip) applied to a sending device. The method for receiving control information may be performed by a receiving device or a communications apparatus (for example, a chip) applied to a receiving device. In the following embodiments, an example in which the method for sending control information is performed by the sending device and the method for receiving control information is performed by the receiving device is used as an example. It may be understood that in the following embodiments, all processes performed by the sending device can be performed by the chip applied to the terminal device, and all processes performed by the receiving device can be performed by the chip applied to the receiving device.

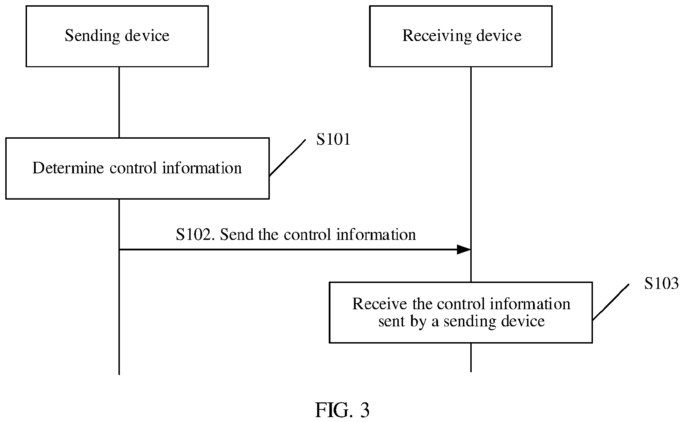

As shown in FIG. 3, the method for sending control information provided in this application includes the following steps.

S101. A sending device determines control information. A resource set corresponding to the control information overlaps a first time-frequency resource, and when a type of the control information is a first control information type, the first time-frequency resource can be used to bear the control information; or when a type of the control information is a first control information type, a search space corresponding to the control information overlaps a first time-frequency resource; or the control information is used to indicate that the receiving device receives data on a second time-frequency resource, where the second time-frequency resource overlaps the first time-frequency resource, and the control information is further used to indicate that the first time-frequency resource bears the data.

The resource set corresponding to the control information in this application may be a time-frequency resource set including a time-frequency resource on which the control information is located, or may be understood as a time-frequency resource set including a time-frequency resource on which a search space corresponding to partial or entire control information is located, or may be understood as a time-frequency resource set used to send the control information. One resource set corresponding to the control information includes one or more time-frequency resources. One time-frequency resource of the resource set is located in one or more time domain units, such as a time domain symbol or a slot, in terms of a time domain. One time-frequency resource of the resource set is located in one or more frequency domain units, such as a resource block (resource block, RB) or a resource block group (resource block group, RBG), in terms of a frequency domain.

Before the receiving device receives the control information, the resource set is configured by the sending device for the receiving device. After configuration of the resource set is completed, the receiving device monitors (monitor), on the resource set, the control information sent by the sending device, and the receiving device receives the control information sent by the sending device. The resource set may also be referred to as a control resource set (Control resource set).

That a resource set corresponding to the control information overlaps a first time-frequency resource may be understood as: The resource set corresponding to the control information includes partial or entire first time-frequency resource, or may be understood as that at least one resource element (resource element, RE) in the resource set corresponding to the control information is included in the first time-frequency resource, or at least one RE in the first time-frequency resource is included in the resource set corresponding to the control information.

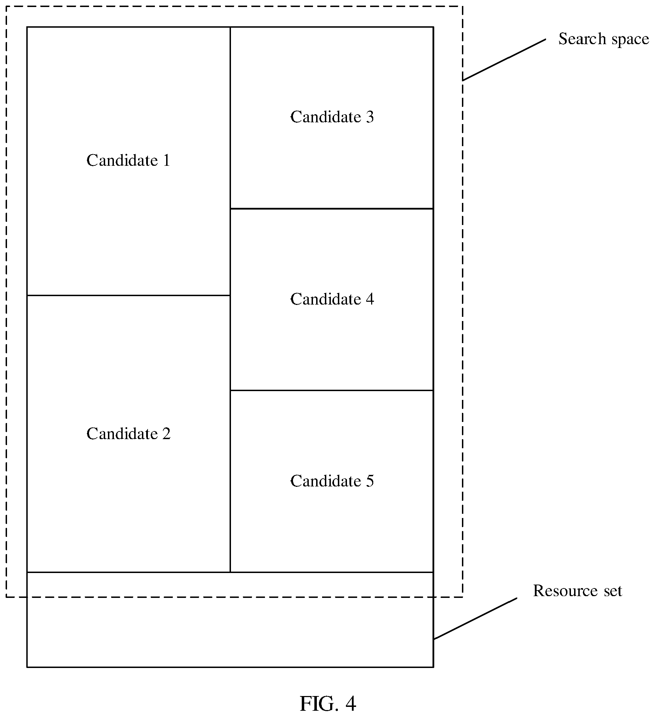

The search space corresponding to the control information may be some default time-frequency resources that are agreed or negotiated by the receiving device and the sending device in advance and that can bear the control information. Specifically, the search space corresponding to the control information includes the following factors: one or more aggregation levels (Aggregation level) of the control information, a quantity of control information candidates corresponding to each aggregation level, and a quantity of control channel elements (Control channel element, CCE) corresponding to each piece of control information candidate. As shown in FIG. 4, the sending device and the receiving device agree in advance that at least one of a candidate 1, a candidate 2, a candidate 3, a candidate 4, and a candidate 5 that are shown in FIG. 4 and that correspond to one aggregation level is used to bear the control information. In this way, when receiving information sent by the sending device, the receiving device may find or detect the control information from the foregoing candidate 1, candidate 2, candidate 3, candidate 4, and candidate 5. The quantity of CCEs included in each candidate in FIG. 4 is the same. As an example but not a limitation, a time-frequency resource in a black bold line block in FIG. 4 is the resource set that corresponds to the control information and that is configured by the sending device for the receiving device, and the candidate 1 to the candidate 5 in a dashed line block in FIG. 4 are the search space corresponding to the control information.

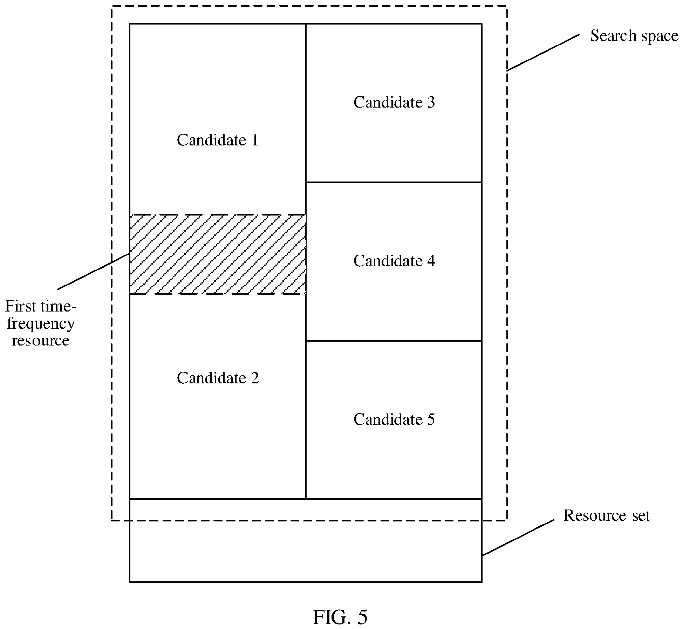

As shown in FIG. 5, that a search space corresponding to the control information overlaps a first time-frequency resource may be understood as: The first time-frequency resource belongs to one of time-frequency resources corresponding to the search space agreed or negotiated between the sending device and the receiving device, or a part of the first time-frequency resource belongs to one of time-frequency resources corresponding to the search space agreed or negotiated between the sending device and the receiving device.

Alternatively, it may be understood that: The first time-frequency resource belongs to one of time-frequency resources corresponding to one candidate that may be used to bear the control information and that is agreed or negotiated between the sending device and the receiving device, or a part of the first time-frequency resource belongs to one of time-frequency resources corresponding to one candidate that may be used to bear the control information and that is agreed or negotiated between the sending device and the receiving device. Alternatively, in other words, at least one RE in the first time-frequency resource includes one candidate corresponding to the control information, or one candidate corresponding to the control information includes at least one RE in the first time-frequency resource.

It may be further understood that: The first time-frequency resource belongs to one of time-frequency resources corresponding to one CCE that may be used to bear the control information and that is agreed or negotiated between the sending device and the receiving device, or a part of the first time-frequency resource belongs to one of time-frequency resources corresponding to one CCE that may be used to bear the control information and that is agreed or negotiated between the sending device and the receiving device. Alternatively, in other words, at least one RE in the first time-frequency resource is included by one CCE corresponding to the control information and vice versa.

S102. The sending device sends the control information to the receiving device.

S103. The receiving device receives the control information from the sending device.

This embodiment of this application provides the method for sending control information. Before detecting the control information, the receiving device does not know whether there is sent control information, and which time-frequency resource bears the control information when the sending device sends the control information to the receiving device. Therefore, in this application, the sending device sends the control information to the receiving device, and when the resource set corresponding to the control information overlaps the first time-frequency resource, indicates, by using the type of the control information (for example, the first control information type), to the receiving device that the first time-frequency resource can bear the control information. In this way, the receiving device can determine to look for or search for control information corresponding to the receiving device on the first time-frequency resource, to avoid looking for the control information on a plurality of time-frequency resources that may bear the control information. Second, the receiving device indicates, by using the control information, to the sending device whether the first time-frequency resource bears the data. In this way, after receiving the control information, the receiving device may receive the data on the first time-frequency resource based on the indication of the control information.

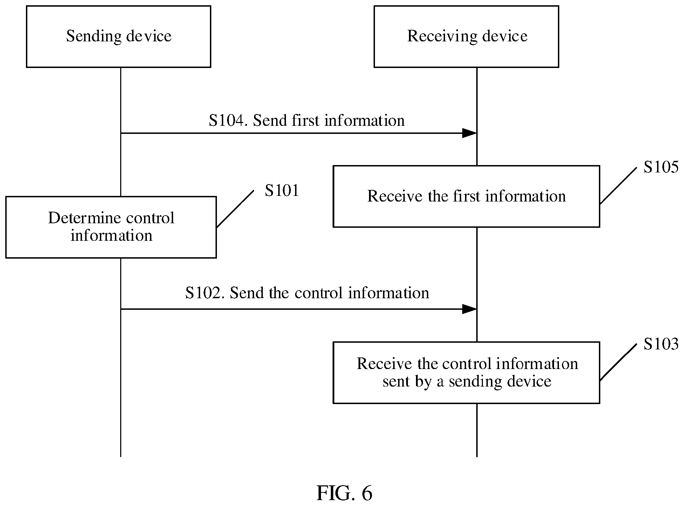

In a possible implementation, as shown in FIG. 6, before step S101, this application further includes the following steps:
S104. The sending device sends first information to the receiving device, where the first information is used to indicate that the first time-frequency resource is a reserved resource, or the first information is used to indicate that the first time-frequency resource cannot be used to bear a signal, or
the first information is used to indicate that the first time-frequency resource does not need to be used to bear a signal sent to the receiving device, or
the first information is used to indicate that the first time-frequency resource does not need to be used to bear at least one of the data and the control information that are sent to the receiving device.

It may be understood that the first time-frequency resource does not need to be used to bear any one of the data and the control information that are sent to the receiving device indicates: that the first time-frequency resource does not need to be used to bear the data sent to the receiving device, or does not need to be used to bear the control information sent to the receiving device, or does not need to be used to bear the data and the control information that are sent to the receiving device. That is, the sending device determines that the first time-frequency resource is a time-frequency resource that does not need to bear any one of the data and the control information. In this way, before sending the control information, the sending device determines, based on whether a preset condition is satisfied, that the first time-frequency resource can bear the control information, or that the first time-frequency resource cannot bear the control information; and before sending the data to the receiving device, the sending device determines, based on whether the preset condition is satisfied, that the first time-frequency resource bears the data, or that the first time-frequency resource does not bear the data. Similarly, the receiving device determines that the first time-frequency resource is a time-frequency resource that does not need to bear any one of the data and the control information. In this way, before or during receiving the control information, the receiving device determines, based on whether the preset condition is satisfied, that the first time-frequency resource can bear the control information, or that the first time-frequency resource cannot bear the control information; and after receiving the data, the receiving device determines, based on whether the preset condition is satisfied, that the first time-frequency resource bears the data, or that the first time-frequency resource does not bear the data.

Specifically, the sending device may send configuration information to the receiving device. The configuration information carries first time-frequency resource information configured by the sending device for the receiving device, and the configuration information may be sent to the receiving device by using Radio Resource Control (Radio Resource Control, RRC) signaling, Medium/Media Access Control (Medium/Media Access Control, MAC) signaling, or physical layer control signaling. In this way, best flexibility can be provided, and logic of using corresponding signaling based on a requirement of each receiving device is simple and easy to implement.

Further, the configuration information may be dedicated to a receiving device, that is, sent to one receiving device; or may be shared by a group of receiving devices, that is, sent to a group of receiving devices. Advantages of the former are flexibility, simplicity, and convenience, but overheads used for information configuration are relatively high when there are a relatively large quantity of receiving devices in a cell. An advantage of the latter is saving overheads, but system complexity is relatively high when there are a few receiving devices in the cell.

In an actual process, transmission of the control information uses a time-frequency resource in a resource set. In addition, alternatively, the time-frequency resource in the resource set does not need to be used to bear the signal. For example, the time-frequency resource is a reserved resource, reserved for a time-frequency resource of another emergency service or signal (which, however, is not actually sent), or is used for vacancy, to help the sending device or the receiving device measure a channel (for example, a signal or interference of a neighboring cell) and the like. Alternatively, the time-frequency resource in the resource set does not need to be used to bear the signal sent to the receiving device. For example, the time-frequency resource is used to bear a signal sent to another receiving device (for example, a reference signal used for measurement of the another receiving device, or signaling used to indicate another receiving device) sent to the another receiving device). Alternatively, the time-frequency resource in the resource set does not need to be used to bear the control information sent to the receiving device, for example, used to bear a reference signal for measurement, a reference signal for demodulation, or the like that is sent to the receiving device.

S105. The receiving device receives first information sent by the sending device for the receiving device.

Specifically, the receiving device may receive, by using the RRC signaling, the MAC signaling, or the physical layer control signaling, the first time-frequency resource configured by the sending device.

In another possible implementation, step S101 in this application further includes:
that the resource set corresponding to the control information overlaps the first time-frequency resource, and when the type of the control information is a second control information type, the first time-frequency resource cannot be used to bear the control information; or
that when the type of the control information is a second control information type, the search space corresponding to the control information does not overlap the first time-frequency resource.

In another example of this embodiment of this application, the first time-frequency resource overlaps the resource set, and the first time-frequency resource at least is a time-frequency resource that is in the resource set and that does not need to be used to bear a signal, or does not need to be used to bear a signal sent to the receiving device, or is not used to bear the control information sent to the receiving device. In one case, the transmission of the control information cannot use the first time-frequency resource, or the first time-frequency resource cannot bear the control information, or the search space corresponding to the control information does not overlap the first time-frequency resource. For example, the control information is used for priority data transmission, or the control information is used for other use (for example, initial random access or resource activation), and a priority of the control information is not higher than that of original use of the first time-frequency resource. For example, the first time-frequency resource is originally used to bear emergency data A, and the priority of the control information is lower than that of the emergency data A.

In another case, the transmission of the control information can use the first time-frequency resource, or the first time-frequency resource can bear the control information, or the search space corresponding to the control information overlaps the first time-frequency resource. For example, the control information is used for data transmission with a relatively high requirement in terms of reliability and/or a transmission latency, or the control information is used for data transmission with a priority higher than a priority of original intended use of the first time-frequency resource, or the control information is used for other use (for example, a cell handover or emergency signaling transmission) and the priority of the control information is higher than that of original intended use of the first time-frequency resource.

In an example, in one of the foregoing cases, the control information may be the first control information type, or in one of the foregoing cases, the control information is the first control information type. In another example, in one of the foregoing cases, the control information may be of the second control information type, while in another one of the foregoing cases, the control information is the first control information type.

The control information may be used to indicate that the receiving device receives the data on the second time-frequency resource. For ease of indication, the indicated second time-frequency resource is usually located in one or several time domain units, such as a time domain symbol, a slot, or a subframe, in terms of a time domain, and is located in one or several frequency domain units, such as an RB, an RBG, or a subband (subband) in terms of a frequency domain. Therefore, the second time-frequency resource is usually greater than or equal to a time-frequency resource used to bear the data in practice. In other words, in addition, alternatively, the time-frequency resource in the second time-frequency resource does not need to be used to bear the signal. For example, the time-frequency resource is used for vacancy, to help the sending device or the receiving device measure a channel (for example, a signal or interference of a neighboring cell), or is reserved for another emergency service or signal (which, however, is not actually sent) and the like. Alternatively, the time-frequency resource in the second time-frequency resource does not need to be further used to bear the signal sent to the receiving device. For example, the resource is used to bear the signal sent to another receiving device (for example, a reference signal used for measurement of the another receiving device, or signaling used to indicate another receiving device) sent to the another receiving device. Alternatively, the time-frequency resource in the second time-frequency resource does not need to be used to bear the control information sent to the receiving device, for example, used to bear a reference signal for measurement, a reference signal for demodulation, or the like that is sent to the receiving device.

In an example of the embodiments of this application, the second time-frequency resource overlaps the first time-frequency resource, and the first time-frequency resource at least is a time-frequency resource that is in the second time-frequency resource and that does not need to be used to bear the signal, or does not need to be used to bear the signal sent to the receiving device, or is not used to bear the data sent to the receiving device. In one case, the control information is used to indicate to the receiving device that the first time-frequency resource does not bear the data, and the sending device does not send the data to the receiving device by using the first time-frequency resource. For example, the data is normal priority data, or a priority of the data is not higher than that of original intended use (for example, used to bear a measurement reference signal or used to measure interference) of the first time-frequency resource. In another case, the control information is used to indicate to the receiving device that the first time-frequency resource bears the data, and the sending device sends the data to the receiving device by using the first time-frequency resource. For example, transmission of the data has a relatively high requirement in terms of reliability and/or a transmission latency, or a priority of the data is higher than that of original intended use (for example, used to bear a measurement reference signal, used to measure interference and the like) of the first time-frequency resource.

The first time-frequency resource may be agreed or negotiated between the sending device and the receiving device, or may be preset in the sending device and the receiving device before delivery. For example, the first time-frequency resource may be a time-frequency resource used to bear a public signal or a system signal.

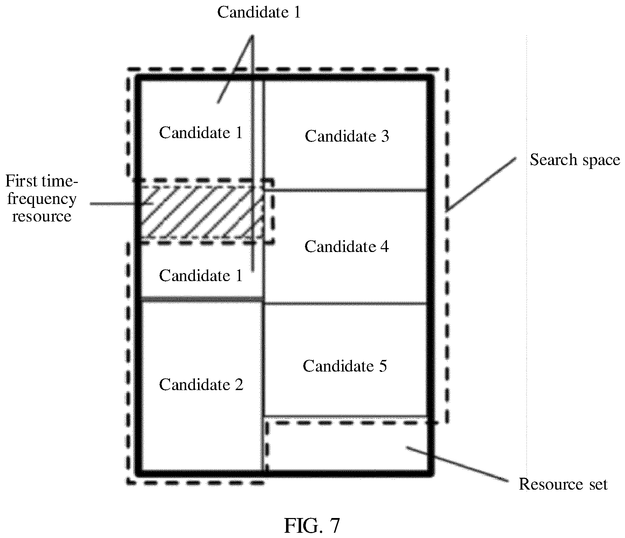

As shown in FIG. 7, that the search space corresponding to the control information does not overlap the first time-frequency resource may be understood as: The first time-frequency resource does not belong to one of time-frequency resources corresponding to a search space agreed or negotiated between the sending device and the receiving device, or does not belong to one of time-frequency resources corresponding to one agreed or negotiated candidate that may be used to bear the control information, or does not belong to one of time-frequency resources corresponding to one agreed or negotiated CCE that may be used to bear the control information.

In an example, the sending device sends configuration information to the receiving device, and configures the first time-frequency resource. The first time-frequency resource is a continuous time-frequency resource, the time-frequency resource does not need to be used to bear any signal, and the configuration information may be RRC signaling or physical layer control information.

Specifically, the first time-frequency resource can bear the control information or cannot bear the control information, or the first time-frequency resource can bear the data or does not need to bear the data. Alternatively, a time-frequency resource on which the first time-frequency resource overlaps the resource set can bear the control information or cannot bear the control information, or a time-frequency resource on which the first time-frequency resource overlaps the second time-frequency resource can bear the data or does not need to bear the data. The sending device reserves resources for better supporting an emergency signal and better supporting forward compatibility. When a high priority data transmission requirement appears, the sending device may half-statically or dynamically use the reserved resources by using the solutions in the embodiments of this application, so that transmission reliability of the high priority data is effectively improved, and a transmission latency of the high priority data is reduced as much as possible.

In an example, the sending device sends configuration information to the receiving device, and configures the first time-frequency resource. The configuration information may be the RRC signaling or MAC signaling. The first time-frequency resource is used to bear a zero power (zero power, ZP) signal, and the first time-frequency resource appears periodically in a time domain.

Specifically, a time-frequency resource on which the first time-frequency resource overlaps the resource set can bear the control information or cannot bear the control information, or a time-frequency resource on which the first time-frequency resource overlaps the second time-frequency resource can bear the data or does not need to bear the data.

To make some receiving devices avoid a signal sent to another receiving device and make some receiving devices measure interference of a neighboring cell and the like, usually, the sending device configures a time-frequency resource used to bear a zero power signal for the receiving devices. On one hand, when a high priority data transmission requirement appears, the sending device may half-statically or dynamically use, by using the solutions in the embodiments of this application, the time-frequency resources used to bear the zero power signal, so that transmission reliability of the high priority data is effectively improved, and a transmission latency of the high priority data is reduced as much as possible.

On the other hand, the sending device determines which signal is selected and sent to the receiving device. If the zero power signal is a signal used to make some receiving devices avoid the signal sent to another receiving device, the sending device replaces data or a reference signal of a receiving device having a low priority with data of a receiving device having a high priority. The sending device may then retransmit affected data or reference signal for the receiving device having a low priority. If the zero power signal is used to make some receiving devices measure interference of a neighboring cell and the like, the sending device replaces the zero power signal with data of a receiving device having a high priority. Although measurement results are affected, the results are finally reported to the sending device for use. The sending device knows that the results are inaccurate, and may instead use historical results or schedule the receiving device to perform re-measurement or the like without causing irretrievable impact on the receiving device that performs measurement.

In another example, the sending device sends configuration information to the receiving device, and configures the first time-frequency resource. The configuration information may be RRC signaling or MAC signaling. The first time-frequency resource is used to bear a reference signal sent to the receiving device. Further, the reference signal is a channel state information-reference signal (channel state information reference signal, CSIRS), and the first time-frequency resource appears periodically in a time domain.

Specifically, a time-frequency resource on which the first time-frequency resource overlaps the resource set can bear the control information or cannot bear the control information, or a time-frequency resource on which the first time-frequency resource overlaps the second time-frequency resource can bear the data or does not need to bear the data. In this case, high priority data transmission of a receiving device may preempt a time-frequency resource on which a reference signal of the receiving device is located. Alternatively, in other words, if transmission of normal data of the receiving device accompanies transmission of the reference signal, the normal data cannot occupy the time-frequency resource on which the reference signal is located. If high priority data of the receiving device is transmitted together with the reference signal, the high priority data can occupy the time-frequency resource on which the reference signal is located. The sending device then avoids, by retransmitting the reference signal or the like, disadvantageous impact caused by that the high priority data occupies the time-frequency resource on which the reference signal is located. In this implementation, flexibility of time-frequency resource utilization may be improved, and reliability and a low latency of high priority data transmission may be ensured to a larger extent. Further, the CSIRS may be a CSIRS used for obtaining channel state information. The CSIRS may alternatively be a CSIRS used for lobe management and the like. Relatively, inaccurate channel state information measurement may not cause a result such as a link failure. Therefore, the CSIRS is limited to a CSIRS merely used for obtaining channel state information may reduce impact caused by occupation of the reference signal. The CSIRS used for lobe management may be sent to more than one user, so that impact caused when a time-frequency resource of the CSIRS used for lobe management is occupied is greater than impact caused when a time-frequency resource of the CSIRS merely used for obtaining channel state information is occupied. However, reliability of the high priority data transmission can be effectively ensured if more transmission resources are provided for the high priority data. Occupying a transmission resource or transmission resources of which reference signal(s) for transmitting the high priority data is a balance decision of the sending device. Robustness of the high priority data transmission supported by the sending device can be effectively improved if more scheduling possibilities are provided for the sending device.

In an example, the sending device sends configuration information to the receiving device, and configures the first time-frequency resource. The configuration information may be RRC signaling or physical layer control signaling. The first time-frequency resource is used to bear a reference signal. Further, the reference signal is a demodulation reference signal (Demodulation Reference Signal, DMRS). The DMRS may be sent by the sending device to the receiving device, or may be sent to another receiving device. Specifically, the first time-frequency resource can bear the control information or cannot bear the control information, or can bear the data or does not need to bear the data. Alternatively, a time-frequency resource on which the first time-frequency resource overlaps the resource set can bear the control information or cannot bear the control information, or a time-frequency resource on which the first time-frequency resource overlaps the second time-frequency resource can bear the data or does not need to bear the data. Occupying a time-frequency resource of the DMRS may cause a demodulation failure of data or the control information that corresponds to the DMRS. However, if a resource on which the data or the control information that corresponds to the DMRS is located is used by the sending device for sending the high priority data, merely sending the DMRS almost has no impact. Similar to analysis on the CSIRS in the foregoing example, supporting the high priority data in occupying the DMRS may provide more scheduling possibilities for the sending device, and robustness of the high priority data transmission supported by the sending device can be effectively improved.

It should be noted that the resource set may overlap or may not overlap the second time-frequency resource. The first time-frequency resource may overlap the resource set, or may overlap the second time-frequency resource. Therefore, the first time-frequency resource can be used to bear the control information, or cannot be used to bear the control information. When not used to bear the control information, the first time-frequency resource can be used to bear the data, or does not need to be used to bear the data.

In addition, it should be further noted that before receiving the control information, the receiving device does not know whether the resource set or the search space bears the control information. Instead, the receiving device detects (detect) candidates on the search space one by one, to determine whether each candidate that may be used to bear the control information bears the control information. Therefore, if the first time-frequency resource cannot bear the control information, the first time-frequency resource does not bear the control information. That the first time-frequency resource can bear the control information means that the first time-frequency resource may actually bear the control information or may not bear the control information. The first time-frequency resource can bear the control information or cannot bear the control information. Correspondingly, on the first time-frequency resource, the receiving device detects the control information or does not detect the control information.

When the receiving device receives the data, the control information indicates to the receiving device that the second time-frequency resource bears the data. Further, the control information indicates to the receiving device that the first time-frequency resource bears the data, or indicates that the first time-frequency resource does not bear the data. The first time-frequency resource bears or does not bear the data. Correspondingly, on the first time-frequency resource, the receiving device receives or does not receive the data.

The first time-frequency resource does not need to be used to bear a signal, or the first information does not need to be used to bear a signal sent to the receiving device, or the first time-frequency resource does not need to be used to bear either of the data and the control information that are sent to the receiving device. Whether the first time-frequency resource can bear the control information may affect a time-frequency resource location of a candidate corresponding to the control information.

As shown in FIG. 5, the first time-frequency resource overlaps the resource set, and the first time-frequency resource can bear the control information. Specifically, when the first time-frequency resource overlaps a candidate 1, a time-frequency resource of the candidate 1 (or in other words, a search space corresponding to the control information or a CCE corresponding to the candidate 1) includes the first time-frequency resource. As shown in FIG. 7, the first time-frequency resource does not overlap the resource set, and the first time-frequency resource cannot bear the control information. Specifically, the first time-frequency resource is outside the candidate 1, that is, the time-frequency resource of the candidate 1 (or in other words, the search space or the CCE corresponding to the candidate 1) does not include the first time-frequency resource. If the sending device selects the candidate 1 to send the control information to the receiving device, in the former case, the first time-frequency resource can bear the control information and the first time-frequency resource bears the control information; and in the latter case, the first time-frequency resource cannot bear the control information, and does not actually bear the control information. That is, if the sending device selects the candidate 1 to send the control information to the receiving device, the candidate 1 is adjacent to the first resource, so that whether the first time-frequency resource can bear the control information actually affects a time-frequency resource to which the control information specifically maps.

If the sending device selects a candidate 2 to send the control information to the receiving device, as shown in FIG. 5, the first time-frequency resource can bear the control information, but does not actually bear the control information; and as shown in FIG. 5, the first time-frequency resource cannot bear the control information, and does not actually bear the control information. However, whether the first time-frequency resource can bear the control information leads to that the candidate 1 includes or does not include the first time-frequency resource. Correspondingly, whether the first time-frequency resource can bear the control information leads to a location change of a time-frequency resource corresponding to the candidate 2. That is, when the sending device selects the candidate 2 to send the control information to the receiving device, regardless of whether the first time-frequency resource overlaps the search space corresponding to the control information, a time-frequency resource that actually bears the control information changes.

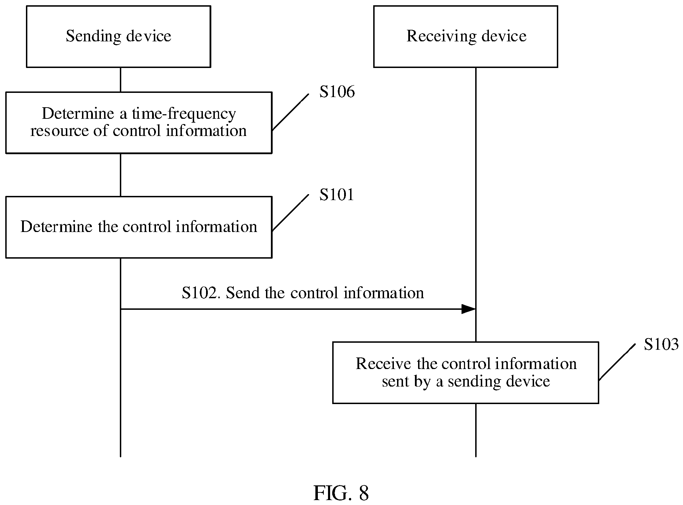

Therefore, in a possible implementation, as shown in FIG. 8, before the sending device sends the control information, the method provided in this embodiment of this application further includes:
S106. The sending device determines a time-frequency resource of the control information based on the first control information type.

Specifically, the sending device may determine, based on the type of the control information, that the first time-frequency resource can bear the control information, or cannot bear the control information. How the sending device specifically determines the type of the control information is described in detail in the following embodiments.

Specifically, the sending device determines that the control information is the first control information type, the resource set corresponding to the control information overlaps the first time-frequency resource, and the first control information type is used to indicate that the first time-frequency resource can bear the control information; or the sending device determines that the control information is a second control information type, and the second control information type is used to indicate that the first time-frequency resource cannot bear the control information; or the sending device determines that the control information is the first control information type, and the first control information type is used to indicate that the search space corresponding to the control information overlaps the first time-frequency resource; or the first control information type is used to indicate that the search space corresponding to the control information does not overlap the first time-frequency resource.

The sending device then may determine a time-frequency location corresponding to the search space (or a candidate or a CCE corresponding to the candidate) corresponding to the control information based on whether the first time-frequency resource can bear the control information, that is, determine the time-frequency resource of the control information. Optionally, the sending device may determine an aggregation level corresponding to the control information sent at that time, and then determine the search space corresponding to the control information, the candidate corresponding to the control information, or the like based on the aggregation level.

Optionally, the sending device selects a candidate used to bear the control information from candidates corresponding to the control information, that is, determine the time-frequency resource of the control information.

Before step S103, the method provided in this application further includes:
S107. The receiving device determines that the control information is the first control information type, and determines a time-frequency resource included in the search space corresponding to the control information.

Before or when the receiving device receives the control information, the method further includes:
S108. The receiving device determines that the control information is the first control information type, that the resource set overlaps the first time-frequency resource, and that the first time-frequency resource can be used to bear the control information or cannot bear the control information.

Specifically, the receiving device can determine the type of the control information based on to-be-detected control information, and further determines that the first time-frequency resource can bear the control information or cannot bear the control information, or determine whether the first time-frequency resource overlaps the search space (or a candidate, or a CCE) corresponding to the control information. When the control information is the first control information type, the resource set corresponding to the control information overlaps the first time-frequency resource, and the first control information type is used to indicate that the first time-frequency resource can bear the control information; or the first control information type is used to indicate that the first time-frequency resource cannot bear the control information; or when the control information is the first control information type, the first control information type is used to indicate that the search space corresponding to the control information overlaps the first time-frequency resource; or the first control information type is used to indicate that the search space corresponding to the control information does not overlap the first time-frequency resource.

The receiving device then may determine a time-frequency location corresponding to the search space (or a candidate or a CCE corresponding to the candidate) corresponding to the control information based on whether the first time-frequency resource can bear the control information. Further, the receiving device may determine search spaces, candidates corresponding to the control information, or the like that correspond to different aggregation levels.

After determining the search spaces, the candidates corresponding to the control information, or the like that correspond to different aggregation levels, the receiving device may detect the control information on candidates at different aggregation levels (or one aggregation level), to determine whether the control information is sent and determine content of the control information, and to implement receiving of the control information.

It should be noted that S108 may be implemented before S103 in this embodiment of this application. For example, after determining candidates at all aggregation levels corresponding to the control information, the receiving device implements detection on and receiving of the control information on the determined candidates. S108 may further be implemented during an implementation process of S 103. For example, the receiving device determines a candidate at one aggregation level, implements detection on and receiving of the control information on the candidate at the aggregation level, and then, if necessary, further determines a candidate at a next aggregation level, and implements detection on and receiving of the control information on the candidate at the next aggregation level. Herein, "if necessary" may mean that no control information is detected on the candidate corresponding to the former aggregation level, or control information is detected on the candidate corresponding to the former aggregation level, but another aggregation level still needs to be tried to reduce a probability that the detected control information is a false-alarm, or the like. With regard to how to specifically receive the control information, different device manufacturers may have different implementation methods. This is not limited in this embodiment of this application.

The following describes the type of the control information. Specifically, the first control information type is determined based on at least one of the following factors, including: a format of the control information, a time-frequency resource location of the control information, or a monitoring period type corresponding to the control information.

Control information in different formats may be used in different scenarios, for example, a format of control information that schedules data and a format of control information that schedules high priority data may be different. The type of the control information may be a format of the control information, or the type of the control information may be determined based on the format of the control information. An example in which the control information for scheduling normal data has a format 1 and the control information for scheduling high priority data has a format 2 is used for description. In an example, when the first control information type is the format 2, the first control information type is used to indicate that the first time-frequency resource can bear the control information, or the first control information type is used to indicate that the search space corresponding to the control information overlaps the first time-frequency resource. When the sending device implements S107, that is, determines the time-frequency resource of the control information, if the sending device determines that the control information in the format 2 is to be sent, the sending device can determine that the first time-frequency resource can bear the control information, and determine the time-frequency resource of the control information on the premise that the first time-frequency resource can bear the control information. If the sending device determines that the control information in the format 1 is to be sent, the sending device can determine that the first time-frequency resource cannot bear the control information, and determine the time-frequency resource of the control information on the premise that the first time-frequency resource cannot bear the control information. When the receiving device implements S103, that is, determines whether the first time-frequency resource can bear the control information, if the receiving device determines that target control information received at this time is the control information in the format 2, the receiving device can determine that the first time-frequency resource can bear the control information, and determine the time-frequency resource location of a CCE, a candidate, or a search space corresponding to the control information on the premise that the first time-frequency resource can bear the control information. If the receiving device determines that target control information received at this time is the control information in the format 1, the receiving device can determine that the first time-frequency resource cannot bear the control information, and determine the search space of the control information, or the like on the premise that the first time-frequency resource cannot bear the control information.

In another example, when the first control information type is the format 1, the first control information type is used to indicate that the first time-frequency resource cannot bear the control information, or the first control information type is used to indicate that the search space corresponding to the control information does not overlap the first time-frequency resource. The implementation process is similar to the foregoing example, and details are not described herein.

It should be noted that the foregoing uses an example of the control information of the normal data and the control information of the high priority data for description, but this is not limited in this embodiment of this application. Any implementation method that uses different control information formats to distinguish whether the first time-frequency resource can bear the control information falls within the protection scope of the embodiments of this application. In addition, the foregoing uses an example of the format 1 and the format 2. In specific implementations, formats of one type and formats of another type may be used for replacement. The formats of one type and the formats of another type may each be one format or may each include more than one format.

By using the format of the control information to distinguish whether the first time-frequency resource can bear the control information, a program of the sending device and the receiving device can be implemented in relatively simple logic. However, the price may be that the format of the control information has relatively many types, and the program needs to be implemented by the sending device and the receiving device by using more processors.

Because the high priority data usually has a relatively high requirement for a transmission latency and reliability, the high priority data usually needs more transmit opportunities. For example, URLLC data may request that transmission reliability reaches 99.999% within 1 ms. Therefore, such URLLC data may need a system to support 7 to 8 transmit opportunities within 1 ms. Correspondingly, the control information used to schedule such URLLC data may appear at many locations of the 1 ms. However, the normal data does not have a similar high transmission requirement, and the requirement of the normal data can be satisfied provided that there is one transmit opportunity within 1 ms. Correspondingly, reducing transmit opportunities can help the system support normal data transmission with lower overheads, and can also help the receiving device that receives the normal data reduce more energy consumption. Therefore, the control information of the normal data usually appears at a start of 1 ms.

Correspondingly, the type of the control information may be a time-frequency resource location of the control information, or the type of the control information may be determined based on the time-frequency resource location of the control information. An example in which a time-frequency resource of control information that schedules the normal data is a time-frequency resource 1, and a time-frequency resource of the control information that schedules the high priority data is a time-frequency resource 2 is used for description. The time-frequency resource 1 is located in a class A time-frequency resource, and the class A time-frequency resource is located at first 2 to 3 symbols of each slot. The time-frequency resource 2 is located in a class B time-frequency resource, and the class B time-frequency resource is located in symbols other than the first 2 to 3 symbols of each slot. In an example, when the first control information type is control information that belongs to the class B time-frequency resource, the first control information type is used to indicate that the first time-frequency resource can bear the control information, or the first control information type is used to indicate that the search space corresponding to the control information overlaps the first time-frequency resource. When the sending device implements S10X, that is, determines the time-frequency resource of the control information, if the sending device determines that it needs to transmit to-be-sent control information in the class B time-frequency resource, the sending device can determine that the first time-frequency resource can bear the control information, and determine the time-frequency resource of the control information on the premise that the first time-frequency resource can bear the control information. If the sending device determines that it needs to transmit the to-be-sent control information in the class A time-frequency resource, the sending device can determine that the first time-frequency resource cannot bear the control information, and determine the time-frequency resource of the control information on the premise that the first time-frequency resource cannot bear the control information. When the receiving device implements S103, that is, determines whether the first time-frequency resource can bear the control information, if the receiving device determines that target control information received at this time needs to be monitored on the class B time-frequency resource, the receiving device can determine that the first time-frequency resource can bear the control information, and determine the time-frequency resource location of a CCE, a candidate, or a search space corresponding to the control information on the premise that the first time-frequency resource can bear the control information. If the receiving device determines that a target control information received at this time needs to be monitored on the class A time-frequency resource, the receiving device can determine that the first time-frequency resource cannot bear the control information, and determine the search space of the control information or the like on the premise that the first time-frequency resource cannot bear the control information.

In another example, when the first control information type is control information that belongs to the class A time-frequency resource, the first control information type is used to indicate that the first time-frequency resource cannot bear the control information, or the first control information type is used to indicate that the search space corresponding to the control information does not overlap the first time-frequency resource. The implementation process is similar to the foregoing example, and details are not described herein.

The class B time-frequency resource and the class A time-frequency resource may correspond to same or different frequency domain resources. For example, the normal data and the high priority data may be scheduled or transmitted on one carrier or subband or BWP (Bandwidth part), and the class B time-frequency resource and the class A time-frequency resource may correspond to a same frequency domain resource. For another example, the normal data and the high priority data are scheduled or transmitted respectively on two types of carriers or subbands or BWPs (Bandwidth part), and the class B time-frequency resource and the class A time-frequency resource may correspond to different frequency domain resources. One of the two types of carrier merely can bear the normal data, or merely can bear the high priority data.

It should be noted that the foregoing uses an example of the control information of the normal data and the control information of the high priority data for description, but this is not limited in this application. Any implementation method that uses control information of different time-frequency locations to distinguish whether the first time-frequency resource can bear the control information falls within the protection scope of this application. In addition, more specifically, the time-frequency resource location of the control information may be a specific time-frequency resource location for bearing the control information, or may be a time-frequency resource location of the resource set corresponding to the control information.

By using the time-frequency resource location of the control information to distinguish whether the first time-frequency resource can bear the control information, a program of the sending device and the receiving device can be implemented in a simpler manner. However, costs may be a relatively large quantity of cases of distinction of the control information and slightly complex logic.

The type of the control information may further be a monitoring period type of the control information, or the type of the control information may be determined based on the monitoring period type of the control information. More specifically, the monitoring period may be a period corresponding to the search space, or may be a period corresponding to the resource set. An example of the normal data and high priority data is still used for description. A monitoring period corresponding to the control information of the normal data is greater than a monitoring period corresponding to the high priority data. The monitoring period may be configured by the sending device for the receiving device by using RRC signaling. A period corresponding to the normal data may be configured by using a slot as a unit. For example, the shortest is one slot, and the like. A period corresponding to the high priority data may be configured by using a symbol as a unit. For example, the shortest is one symbol, and the like. The sending device and the receiving device may both determine, based on whether the monitoring period corresponding to the control information is configured by using the slot as a unit or is configured by using the symbol as a unit, that the first time-frequency resource can bear the control information, or determine that the first time-frequency resource cannot bear the control information. For a specific implementation method, refer to the foregoing descriptions of "the format of the control information" and "the time-frequency resource location of the control information". Details are not described herein.

It should be noted that the foregoing uses an example of the control information of the normal data and the control information of the high priority data for description, but this is not limited in this application. Any implementation method that uses control information corresponding to different monitoring periods to distinguish whether the first time-frequency resource can bear the control information falls within the protection scope of this application.

By using the monitoring period corresponding to the control information to distinguish whether the first time-frequency resource can bear the control information, a program of the sending device and the receiving device can be simplified. However, costs may be some scheduling possibilities.

The foregoing three methods for determining the type of the control information can be combined and used. For example, control information that schedules the normal data and control information that schedules the high priority data have different control information formats and correspond to different monitoring periods. In this way, a robuster implementation can be obtained, and reception error caused by wrong understanding of one manner or loss of detection can be reduced.

The foregoing three methods for implementing the type of the control information provided in this embodiment of this application may be used separately or in combination, and may provide more choices and scheduling flexibility for the sending device from many perspectives such as implementation complexity, implementation logic, implementation register, and the like. After balancing various requirements and costs, the sending device may select an appropriate method for implementation.

It may be understood that before the sending device sends the control information to the receiving device, the receiving device and the sending device agree or set by default an association relationship between the type of the control information and whether the first time-frequency resource bears the data/can bear the control information/overlaps the search space corresponding to the control information. In this way, the receiving device may determine, based on the received type of the control information, whether the first time-frequency resource bears the data or the control information from the association relationship agreed in advance.

In an actual process, a process in which the sending device sends the control information to the receiving device may further use the control information to indicate to the receiving device whether a time-frequency resource bears the data. In this way, after receiving the control information, the receiving device may obtain the data on the first time-frequency resource based on the indication of the control information. Therefore, in S 101 in this application, the control information is further used to indicate that the receiving device receives the data on the second time-frequency resource, the second time-frequency resource overlaps the first time-frequency resource, and the control information is further used to indicate that the first time-frequency resource bears the data; or the control information is further used to indicate that the first time-frequency resource does not bear the data control information. The following describes how the control information indicates that the first time-frequency resource bears the data, or how the control information indicates that the first time-frequency resource does not bear the data. Therefore, in a possible implementation, the method provided in this embodiment of this application further includes:
S109. The receiving device determines whether the first time-frequency resource can bear the data based on the control information.

In an actual process, the sending device and the receiving device may agree or set by default a plurality of implementations for indicating whether the first time-frequency resource bears the data. However, if the sending device and the receiving device agree or set by default different manners for indicating whether the control information bears the data, manners in which the receiving device determines, based on the control information, whether the first time-frequency resource can bear the data may be different as well. Therefore, in this application, with reference to contents of the control information in different cases, a specific implementation of step S109 in this application is described in detail.

In a possible implementation, that the control information is further used to indicate whether the first time-frequency resource bears the data may be specifically implemented in the following manner: The control information includes first indication information, where the first indication information is used to indicate that the first time-frequency resource bears the data, or the control information bears second indication information, where the second indication information is used to indicate that the first time-frequency resource does not bear the data. Correspondingly, step S108 in this application may alternatively be implemented in the following manner:
S1091. The receiving device determines, based on the first indication information included in the control information, that the first time-frequency resource bears the data, where the first indication information is used to indicate that the first time-frequency resource bears the data. Alternatively, the receiving device determines, based on the second indication information included in the control information, that the first time-frequency resource does not bear the data, where the second indication information is used to indicate that the first time-frequency resource bears the data.

For example, the first indication information may be a first indicator, and the first indicator is used to indicate that the first time-frequency resource bears the data. For example, the first indicator may be "1", and this is not limited in this application. The second indication information may be a second indicator, and the second indicator is used to indicate that the first time-frequency resource does not bear the data. For example, the second indicator may be "0".

The first indication information or the second indication information may be carried in one dedicated field in the control information, that is, the dedicated field is merely used to indicate whether the first time-frequency resource bears the data. The indication information may further be carried on one bit or several bits in a field for other use in the control information, and the one or more bits are used to indicate whether the first time-frequency resource bears the data.

By using the first indication information included in the control information or the second indication information included in the control information, the sending device indicates to the receiving device whether the first time-frequency resource bears the data, to help simplify program implementation logic and reduce reception errors caused by mistaken detection.

In another possible implementation, that the control information is further used to indicate that the first time-frequency resource bears the data includes: that the control information implicitly indicates whether the first time-frequency resource bears the data. Correspondingly, step S109 in this application may further be implemented in the following manner:
S 1092. The receiving device determines, based on the implicit indication of the control information, that the first time-frequency resource bears the data; alternatively, the receiving device determines, based on the implicit indication of the control information, that the first time-frequency resource does not bear the data.

For example, the sending device may scramble the control information by using a scrambling code sequence, and indicates, by using the control information in a scrambling manner, whether the first time-frequency resource bears the data.

For another example, the sending device and the receiving device agree or set by default to use a location of the control information in one slot to implicitly indicate whether the first time-frequency resource bears the data. For example, a start location (first 2 to 3 symbols) of the control information in one slot is used to implicitly indicate that the first time-frequency resource does not bear the data, and a middle or end location (non-first 2 to 3 symbols) of the control information in one slot is used to implicitly indicate that the first time-frequency resource bears the data.

In still another possible implicit implementation, that the control information is further used to implicitly indicate that the first time-frequency resource bears the data may be implemented in the following manner: The control information indicates, by indicating the second time-frequency resource based on a first time domain unit, to the receiving device that the first time-frequency resource bears the data, or the control information indicates, by indicating the second time-frequency resource based on a first time domain unit, to the receiving device that the first time-frequency resource does not bear the data. Correspondingly, step S108 in this application may further be specifically implemented in the following manner:
S 1093. The receiving device determines that the second time-frequency resource is based on the first time domain unit, and determines that the first time-frequency resource bears the data, or the receiving device determines that the second time-frequency resource is indicated based on the first time domain unit, and determines that the first time-frequency resource does not bear the data.

For example, when the control information uses a symbol as a unit to indicate a duration of the second time-frequency resource in the time domain to the receiving device, the control information indicates that the receiving device bears the data on the first time-frequency resource; and when the control information at least uses a slot as a unit to indicate a duration of the second time-frequency resource in the time domain to the receiving device, the control information indicates that the receiving device does not bear the data on the first time-frequency resource.

Alternatively, the control information indicates that the receiving device receives the data on the second time-frequency resource by using a non-slot-based (non-slot-based) method, the second time-frequency resource overlaps the first time-frequency resource, and the control information is further used to indicate that the first time-frequency resource bears the data. The control information indicates that the receiving device receives the data on the second time-frequency resource by using a slot-based (slot-based) method, the second time-frequency resource overlaps the first time-frequency resource, and the control information is further used to indicate that the first time-frequency resource does not bear the data.

Compared with the foregoing two implicit indication methods, this implicit method does not have extra standardization overheads (since the slot-based/non-slot-based scheduling method is already accepted by a 5G NR system). However, a scheduling priority mechanism may be rigidified to some extent, and scheduling flexibility of the sending device may be limited.

The sending device and the receiving device indicate whether the first time-frequency resource bears the data by in the implicit indication manner of the control information, so that extra added indication information in the control information is avoided, thereby reducing signaling overheads.

In yet another possible implementation, that the control information is further used to indicate that the first time-frequency resource bears the data may be implemented in the following manner: The control information indicates that the data is of a first data type, where the first data type is used to indicate that the first time-frequency resource bears the data, or the data is of a second data type, where the second data type is used to indicate that the first time-frequency resource does not bear the data. Correspondingly, step S109 in this application may further be implemented in the following manner:
S 1094. The receiving device determines that a type of the data indicated by the control information is the first data type, and the receiving device determines that the first time-frequency resource bears the data, where the first indication information is used to indicate that the first time-frequency resource bears the data; alternatively, the receiving device determines that a type of the data indicated by the control information is the second data type, and the receiving device determines that the first time-frequency resource does not bear the data, where the second data type is used to indicate that the first time-frequency resource does not bear the data.

It may be understood that in an actual process, the receiving device at least includes an association relationship between the first data type and that the first time-frequency resource bears the data, and an association relationship between the second data type and that the first time-frequency resource does not bear the data. The association relationships may be configured by the sending device for the receiving device, or may be obtained by the receiving device from another device. This is not limited in this application.

Specifically, that the sending device indicates the data is of the first data type or the second data type by using the control information may be implemented in the following manner: The sending device uses the control information to indicate at least one of target transmission reliability of the data, a target transmission latency of the data, and a service type of the data. It may be understood that the receiving device at least includes a correspondence between the first data type and at least one of the target transmission reliability, the target transmission latency of the data, and the service type of the data that correspond to each piece of data. In this way, when receiving the control information, the receiving device may determine, based on the correspondence, that a type of the data indicated by the control information is the first data type, and further determines, based on the foregoing association relationship, that the first time-frequency resource bears the data.

On the other hand, the receiving device in this application may further determine, based on the type of the data that is received on the first time-frequency resource and that is indicated by the indication information, whether a first resource element bears the data. Therefore, in another possible implementation, step 109 in this application may be implemented in the following manner:
S 1095. The receiving device determines that the data is of the first data type, and determines that the first time-frequency resource bears the data, or the receiving device determines that the data is of the second data type, and determines that the first time-frequency resource does not bear the data.

Specifically, the first data type and the second data type may be determined based on at least one of the following factors: target transmission reliability of the data, a target transmission latency of the data, or a service type of the data. The first data type and the second data type satisfy at least one of the following conditions:

Target transmission reliability of the first data type and that of the second data type are different, a target transmission latency of the first data type and that of the second data type are different, and a service type of the first data type and that of the second data type are different.

The reason is that in actual transmission processes, some data has a short target transmission latency, for example, URLLC data, while some data has a longer target transmission latency compared with the URLLC data, for example, eMBB data. In a manner in which the control information indicates a type of data by using the target transmission latency of the data, the receiving device may determine, based on the target transmission latency of the data, whether a first time-frequency resource that has been configured bears the data. Therefore, the type of the data can be determined between the sending device and the receiving device based on the target transmission latency of the data, or the type of the data is divided based on the target transmission latency.

Similarly, some data has a relatively high target transmission reliability requirement, for example, URLLC data, while some data has a relatively low target transmission reliability requirement, for example, eMBB data. A type of data can be determined between the sending device and the receiving device based on target transmission reliability of the data, or the type of the data is divided based on target transmission reliability.

More specifically, whether the first time-frequency resource bears the data is further indicated between the sending device and the receiving device based on two features, namely, the target transmission reliability of the data and the target transmission latency of the data, or by further including another feature. In this way, when receiving control information used to indicate that two or more pieces of data have one same feature and another different feature, the receiving device may further distinguish whether the first time-frequency resource bears the data by using the another different feature.

Further, the type of the data can be determined between the sending device aand the receiving device based on the service type of the data, or the type of the data is the service type of the data. One service type of the data corresponds to a requirement of the service data transmission, and may include, but is not limited to, transmission reliability, a transmission latency, a data transmission rate, and the like.

Apart from being indicated by using the control information, the data type may further be determined based on the carrier or subband or BWP that bears the data.

Specifically, the receiving device may determine a type to which the control information belongs based on features had by the control information. For example, the receiving device may determine the type of the control information based on the format of the control information, the time-frequency resource location for bearing the control information, and the detection period corresponding to the control information.

Specifically, the time-frequency resource location for bearing the control information means that scheduling data DCI corresponds to one transmission when scheduling data DCI is located at a location of one slot, for example, located at several first symbols of one slot, and corresponds to another transmission when the scheduling data DCI is located at another location of one slot. A quantity of the several first symbols may be one, two, three, or the like.

In addition, the receiving device may further determine the type of the control information based on a transmission scheduling mode, a transmission scheduling unit, a target error probability, a hybrid automatic repeat request (hybrid automatic repeat request, HARQ) feeding-back mechanism, and a channel state information (channel state information, CSI) feeding-back mechanism that are of the control information.

Specifically, the transmission scheduling modes of different types of the control information include at least one of the following factors: a multiple-input multiple-output (multiple-input multiple-output, MIMO) technology transmission mode that may be a transmit diversity, spatial multiplexing, Large CDD, using a precoding matrix, using different beam types, and the like; a quantity of antennas; and one-shot transmission or re-transmission. For example, a transmission scheduling mode of the first-type control information includes the MIMO transmission mode, and a transmission scheduling mode of the second-type control information includes the one-shot transmission. In this way, after receiving the control information, the receiving device may determine the type to which the control information belongs based on transmission scheduling mode of the received control information, and further determine whether the first resource element of the first time-frequency resource bears the data.

The transmission scheduling units of different types of the control information may be distinguished in the following manner, that is, a duration of a time domain unit in the time domain when the control information is transmitted and used. For example, one type of transmission uses a slot as a scheduling unit, and transmits and schedules one or one more slots for transmission once, or may further uses a symbol as a scheduling unit, and transmits and schedules one or one more symbols for transmission once.

For example, a target error probability of the first-type control information is relatively high, for example, 10%, or a target error probability of the second-type control information is relatively low, for example, 0.1%, or an error probability of transmission is very low, for example, 0.01%. In this way, when receiving the control information, the receiving device may distinguish types of received control information based on a target error probability of the received control information.

Different types of control information have different HARQ feeding-back mechanisms. For example, for the first-type control information, an A/N needs to be fed back, or for the second-type control information, no A/N needs to be fed back; and for another example, for the first-type control information, an A/N needs to be fed back in m time units after receiving of a signal is completed, or for the second-type control information, an A/N needs to be fed back in n time units after receiving of a signal is completed (where n is less than m).

Different types of control information have different CSI feeding-back mechanisms. For example, for the first-type control information, instantaneous CSI information does not need to be fed back, and for the second-type control information type transmission, instantaneous CSI information used by a base station for accurately scheduling needs to be fed back. It should be noted that instantaneous CSI information needs to be fed back for the transmission may mean that once the transmission is scheduled, the receiving device immediately feeds back instantaneous CSI information related to the transmission to the sending device, or may mean that once the transmission is scheduled, the sending device instructs the receiving device to feed back instantaneous CSI information related to the transmission, or the like. The words "related to the transmission" means that a time-frequency resource corresponding to the instantaneous CSI information and a time-frequency resource occupied by the data and/or pilot transmission at least includes one same resource element.

The foregoing simply uses an example of the URLLC data and the eMBB data for distinction. (For example, the eMBB service data includes: an ultra-high-definition video, and the like, and main characteristics of the services are a large volume of transmitted data and a very high transmission rate. The URLLC service data includes: wireless control in an industrial manufacturing or production procedure, motion control of a driverless vehicle and a pilotless aircraft, and tactile interactive applications such as remote repair and remote operation. Main characteristics of the services are requirements for ultra-high reliability, a low latency, and a relatively small volume and burstiness of transmitted data. Typical mMTC service data includes: smart grid power distribution automation, a smart city, and the like. Main characteristics are a huge quantity of online devices, a relatively small volume of transmitted data, and insensitivity of data to a transmission latency. The mMTC terminals need to satisfy requirements for low costs and a very long standby time. In addition, the data may alternatively be non-service data, for example, may be signaling exchanged between the sending device and the receiving device, broadcast information sent by the sending device to the receiving device, or the like.) However, in practice, a target of a 5G system is to support various services with different transmission requirements. That is, high reliability of URLLC may be a limit of the 5G system in supporting transmission with a low latency and high reliability. Within a limit range, the 5G system may define different transmission delay requirements and/or different transmission reliability requirements. Therefore, based on the foregoing implementations, the system may further define one or more transmission latency levels. When two pieces of data or two signals conflict, the sending device and the terminal device may determine, based on comparison between transmission latency levels of the two pieces of data or the two signals, the first time-frequency resource bears which piece of data or which signal. Similarly, a level of the transmission reliability may also be defined. In addition, to determine the type of the data based on the service type, requirements of data of two service types on a transmission latency may be comprehensively compared, to provide a more comprehensive comparison mechanism.

Based on advanced transmission performance provided by a current 5G system, a quantity of services carried by the 5G system may be far greater than a quantity that can be predicted today. The embodiments of this application provide the foregoing three methods for determining, based on the type of the data, whether the first time-frequency resource bears the data. The three methods used separately or in combination may provide more choices and scheduling flexibility for the sending device and the receiving device. After balancing various requirements and costs, the sending device may select an appropriate method for implementation.

In yet another possible implementation, the control information is further used to indicate that the first time-frequency resource bears the data, and may be specifically implemented in the following manner: The control information is a first control information type, where the first control information type is used to indicate that the first time-frequency resource bears the data, or the first control information type is used to indicate that the first time-frequency resource does not bear the data.

S 1096. The receiving device determines that the control information is the first control information type, and determines that the first time-frequency resource bears the data, or the receiving device determines that the control information is the second control information type, and determines that the first time-frequency resource does not bear the data.

Specifically, the control type is determined based on at least one of the following factors: a format of the control information, a time-frequency resource location of the control information, or a monitoring period type corresponding to the control information. The first control information type and the second control information type satisfy at least one of the following factors: that a format of the first control information type and a format of the second control information type are different, that a monitoring period type corresponding to the first control information type and a monitoring period type corresponding to the second control information type are different, and a time-frequency resource location of the first control information type and a time-frequency resource location of the second control information type are different.

An example in which the control information schedules the normal data in a format 1, and the control information schedules the high priority data in a format 2 is used for description. The first time-frequency resource does not bear the normal data, and the first time-frequency resource bears the high priority data. The first time-frequency resource overlaps the second time-frequency resource. In an example, the first control information type is the format 2, and the first control information type is used to indicate that the first time-frequency resource can bear the data. When the sending device determines a time-frequency resource bearing the data, if the sending device determines that the control information scheduling the data is the control information in the format 2, the sending device can determine that the first time-frequency resource can bear the data, and determine a time-frequency resource bearing the data on the premise that the first time-frequency resource can bear the data. If determining that the control information scheduling the data is the control information in the format 1, the sending device can determine that the first time-frequency resource cannot bear the data, and determine a time-frequency resource bearing the data on the premise that the first time-frequency resource cannot bear the data. When the receiving device determines whether the first time-frequency resource can bear the data, if the receiving device determines and indicates that control information receiving data on the second time-frequency resource is the control information in the format 2, the receiving device can determine that the first time-frequency resource can bear the data, and determine a time-frequency resource location for bearing the data on the premise that the first time-frequency resource bears the data. If the receiving device determines and indicates that control information receiving data on the second time-frequency resource is the control information in the format 1, the receiving device can determine that the first time-frequency resource does not need to bear the data, and determine a time-frequency resource location for bearing the data on the premise that the first time-frequency resource does not bear the data.

In another example, when the first control information type is the format 1, the first control information type is used to indicate that the first time-frequency resource does not bear the data. The implementation process is similar to the foregoing example, and details are not described herein.

It should be noted that the foregoing uses an example of the control information of the normal data and the control information of the high priority data for description, but this is not limited in this embodiment of this application. Any implementation method that uses different control information formats to distinguish whether the first time-frequency resource bears the data is under the protection scope of this application. In addition, the foregoing uses an example of the format 1 and the format 2. In specific implementations, one type of formats and another type of formats may be used for replacement. The one type and the another type of formats may be one format, or may include more formats.

An example in which the type of the control information is determined based on the time-frequency resource location of the control information or the monitoring period type corresponding to the control information is similar to an example in which whether the first time-frequency resource can bear the control information is determined based on the time-frequency resource location of the control information or the monitoring period type corresponding to the control information, the beneficial effects are similar as well, and details are not described herein.

In the foregoing solutions, this application provides a plurality of methods in which the control information indicates that the first time-frequency resource bears the data, or the first time-frequency resource does not bear the data. The methods used separately or in combination may provide more choices and scheduling flexibility for the sending device and the receiving device. After balancing various requirements and costs, the sending device may select an appropriate method for implementation.

Optionally, the control information in this application is further used to indicate that the first time-frequency resource does not bear at least one of the data and the control information.

Specifically, that the control information indicates that the first time-frequency resource does not bear any one of the data and the control information can be understood as: The control information indicates that the first time-frequency resource neither bears the data, nor bears the control information. In this way, when receiving the control information, the receiving device may determine that the first time-frequency resource is a time-frequency resource to be avoided, so that the receiving device does not find the data and the control information on the first time-frequency resource.

Optionally, when the control information is further used to indicate that the first time-frequency resource does not bear at least one of the data and the control information, the first time-frequency resource bears a zero power signal; or the first time-frequency resource bears a reference signal sent to the receiving device.

Optionally, the reference signal is a channel state information-reference signal (channel state information-reference signal, CSIRS).

Specifically, the channel state information-reference signal is merely used for channel state information acquisition, CSI acquisition.

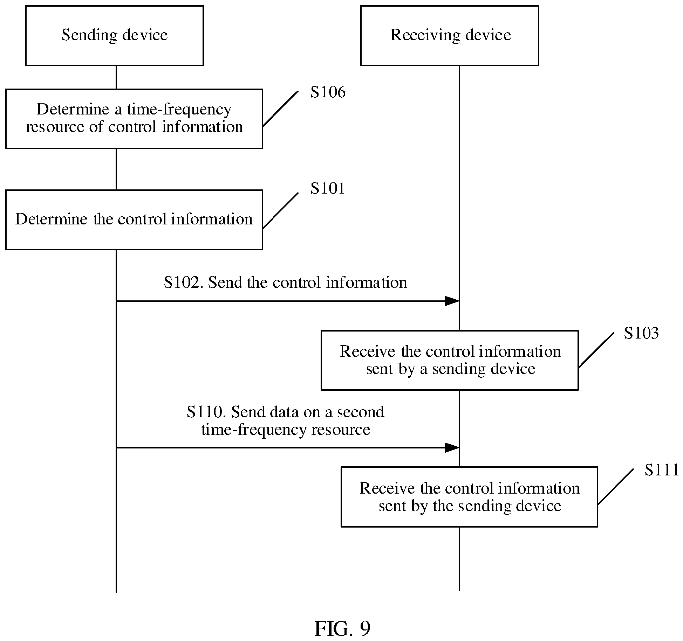

Optionally, as shown in FIG. 9, the method provided in this embodiment of this application further includes the following steps.

S110. The sending device sends the data to the receiving device on the second time-frequency resource.

The sending device determines whether the first time-frequency resource bears the data, determines a time-frequency resource location for bearing the data, maps the data to a time-frequency resource used to bear the data, then generates a sending signal, and sends the data to the receiving device on the second time-frequency resource.

Sill. The receiving device receives the data on the second time-frequency resource.

It should be noted that S109 may be implemented after S110. That is, the receiving device may receive a signal on the second time-frequency resource, determine whether the first time-frequency resource bears the data, then determines the time-frequency resource used to bear the data on the second time-frequency resource, and processes a received signal. S109 may be implemented during an implementation process of S 110. For example, the receiving device partially receives the signal on the second time-frequency resource, that is, determines whether the first time-frequency resource bears the data, then determines the time-frequency resource used to bear the data on the second time-frequency resource, and processes a signal that has been received. Similarly, S109 may further be implemented before S110. Different device manufacturers may have different implementation methods for implementing how the data is specifically received. This is not limited in this application.

Optionally, the control information provided in this application is further used to indicate that the receiving device sends uplink data on a third time-frequency resource. Correspondingly, the method provided in this application further includes the following steps:
S 112. The receiving device sends the uplink data to the sending device on the third time-frequency resource.

The foregoing describes the solutions provided in this application mainly from the perspective of interaction between network elements. It may be understood that to achieve the foregoing functions, various network elements, such as the sending device, the receiving device, and the like, include corresponding hardware structures and/or software modules for executing various functions. A person skilled in the art should easily be aware that, in combination with the examples of units and algorithm steps described in the embodiments disclosed in this specification, this application can be implemented by hardware or a combination form of hardware and computer software. Whether a function is performed by using hardware or computer software driving hardware depends on particular applications and design constraints of the technical solutions. A person skilled in the art may use different methods to implement the described functions for the particular applications, but it should not be considered that the implementation goes beyond the scope of this application.

In this application, functional modules of the sending device, the receiving device, and the like may be divided based on the foregoing method examples. For example, various functional modules may be divided corresponding to various functions, or two or more functions may be integrated in one processing module. The integrated module may be implemented in a form of hardware, or may be implemented in a form of a software functional module. It should be noted that module division in this application is exemplary and is merely a logical function division. During actual implementations, there may be another division manner.

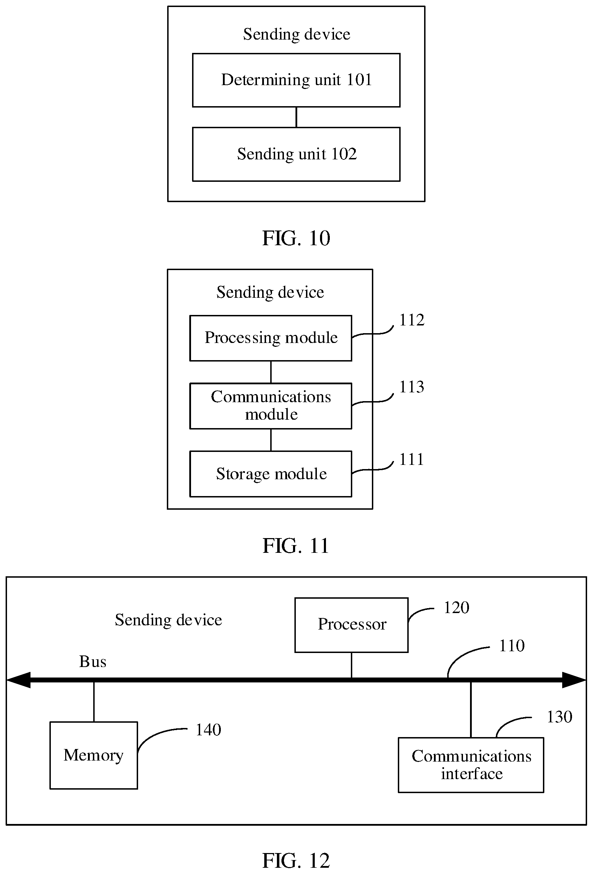

When an integrated unit is used, FIG. 10 is a possible schematic structural diagram of the sending device included in the foregoing embodiments. The sending device includes: a determining unit 101, and a sending unit 102. The determining unit 101 is configured to support the sending device in performing S101 and S106 in the foregoing embodiments. The sending unit 102 is configured to support the sending device in performing steps S 102, S104, and S 110 in the foregoing embodiments. For all content related to the steps in the foregoing method embodiments, refer to functional descriptions of corresponding functional modules. Details are not described herein.

Optionally, the sending device may further include: a receiving unit, configured to support the sending device in performing S110 in the foregoing embodiments.

Based on using hardware for implementation, the sending unit 102 in this application may be a sender of the sending device. In addition, the receiving unit may be a receiver of the sending device. The sender and the receiver of the sending device are usually integrated together to serve as a transceiver. A specific determining unit 101 may be integrated in the processor of the sending device.

When an integrated unit is used, FIG. 11 is a possible schematic logical structural diagram of the sending device included in the foregoing embodiments. The sending device includes a processing module 112 and a communication module 113. The processing module 112 is configured to control and manage actions of the sending device. For example, the processing module 112 is configured to support the sending device in performing S101 and S106 in the foregoing embodiments. The communication module 113 is configured to support the sending device in performing S102, S104, and S110 in the foregoing embodiments, and/or used in another process in the technology described in this specification. The communication module 113 is mainly configured to communicate with the receiving device. The sending device may further include a storage module 111, configured to store program code and data of the sending device.

The processing module 112 may be a processor or a controller, and for example, may be a central processing unit, a general-purpose processor, a digital signal processor, an application-specific integrated circuit, a field programmable gate array or another programmable logic device, a transistor logic device, a hardware component, or any combination thereof. The processing module 112 may implement or execute various exemplary logical blocks, modules, and circuits described with reference to content disclosed in this application. The processor may alternatively be a combination, for example, a combination including one or more microprocessors or a combination of a digital signal processor and a microprocessor, for implementing a computing function. The communication module 113 may be a transceiver, a transceiver circuit, a communications interface, or the like. The storage module 111 may be a memory.

When the processing module 112 is a processor 120, the communication module 113 is a communications interface 130 or a transceiver, and the storage module 111 is a memory 140, the sending device included in this application may be a device shown in FIG. 12.

The communications interface 130, the processor 120, and the memory 140 are connected to each other through the bus 110. The bus 110 may be a PCI bus, an EISAbus, or the like. The bus may be classified into an address bus, a data bus, a control bus, and the like. For ease of representation, only one bold line is used for representation in FIG. 12, but it does not represent that there is only one bus or one type of bus. The memory 140 is configured to store program code and data of the sending device. The communications interface 130 is configured to support the sending device in communicating with another device (such as the receiving device). The processor 120 is configured to support the sending device in executing the program code and the data that are stored in the memory 140 to implement a method for sending control information provided in this application.

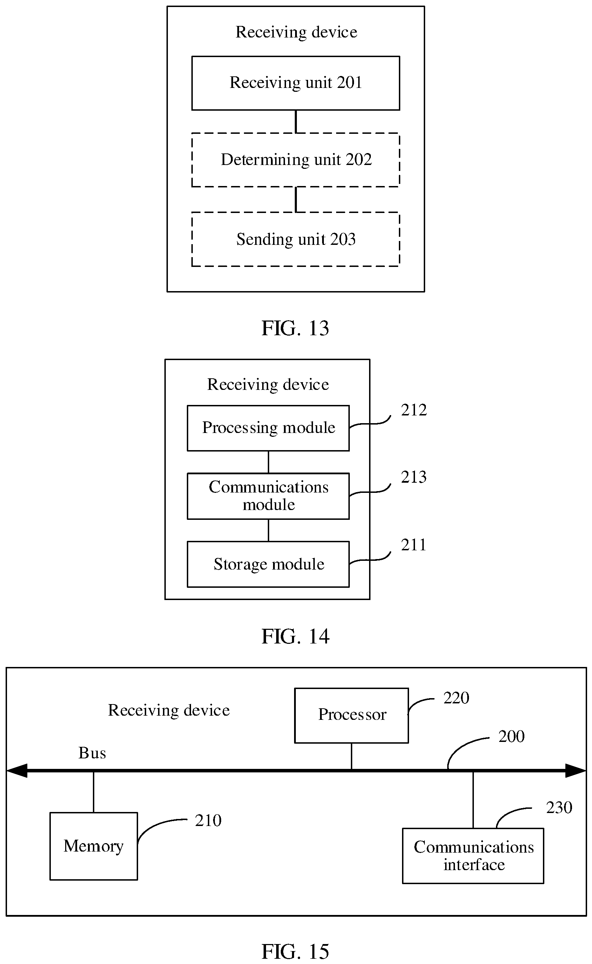

When an integrated unit is used, FIG. 13 is a possible schematic structural diagram of the receiving device included in the foregoing embodiment. The receiving device includes: a receiving unit 201. The receiving unit 201 is configured to support the receiving device in performing steps S103, S105, and Sill in the foregoing embodiments. In addition, the receiving device further includes: a determining unit 202, and a sending unit 203. The determining unit 202 is configured to support the receiving device in performing steps S107, S108, and S109 (specifically may be S1091, S1092, S1093, S1094, S1095, and S1096) in the foregoing embodiments. The sending unit 203 is configured to support the receiving device in performing steps S 112 in the foregoing embodiments, and/or used in another process in the technology described in this specification. For all content related to the steps in the foregoing method embodiments, refer to functional descriptions of corresponding functional modules. Details are not described herein.

Based on using hardware for implementation, the receiving unit 201 in this application may be a receiver of the receiving device, and the sending unit 203 may be a sender of the receiving device. The receiver and the transceiver are usually integrated together to act as a transceiver. A specific determining unit 201 and a sending unit 203 may be a communications interface of the receiving device, and the determining unit 202 may be integrated in the processor of the receiving device.

When an integrated unit is used, FIG. 14 is a possible schematic logical structural diagram of the receiving device included in the foregoing embodiments. The receiving device includes: a processing module 212 and a communication module 213. The processing module 212 is configured to perform control management on actions of the receiving device. For example, the processing module 212 is configured to support the receiving device in performing steps S107, S108, and S109 (specifically S1091, S1092, S1093, S1094, S1095, and S1096) in the foregoing embodiments. The communication module 213 is configured to support the receiving device in performing S103, S105, S111, and step S112 in the foregoing embodiments. The receiving device may further include a storage module 211, configured to store program code and data of the receiving device.

The processing module 212 may be a processor or a controller, and for example, may be a central processing unit, a general purpose processor, a digital signal processor, an application-specific integrated circuit, a field programmable gate array or another programmable logic device, a transistor logic device, a hardware component, or any combination thereof. The processing module 112 may implement or execute various exemplary logical blocks, modules, and circuits described with reference to content disclosed in this application. The processor may alternatively be a combination, for example, a combination including one or more microprocessors or a combination of a digital signal processor and a microprocessor, for implementing a computing function. The communication module 213 may be a transceiver, a transceiver circuit, a communications interface, or the like. The storage module 211 may be a memory.

When the processing module 212 is a processor 220, the communication module 213 is a communications interface 230 or a transceiver, and the storage module 211 is a memory 210, the receiving device in this application may be a device shown in FIG. 15.

The communications interface 230, the processor 220, and the memory 210 are connected to each other through the bus 200. The bus 200 may be a PCI bus, an EISAbus, or the like. The bus may be classified into an address bus, a data bus, a control bus, and the like. For ease of representation, only one bold line is used for representation in FIG. 15, but it does not represent that there is only one bus or one type of bus. The memory 210 is configured to store program code and data that are of the receiving device. The communications interface 230 is configured to support the receiving device in communicating with another device (such as the sending device). The processor 220 is configured to support the receiving device in executing the program code and the data that are stored in the memory 210 to implement a method for receiving control information provided in this application.

In another embodiment of this application, a computer-readable storage medium is further provided. The computer-readable storage medium stores a computer-executable instruction, and when at least one processor of the sending device executes the computer-executable instruction, the sending device performs S101, S106, S102, S104, and S110 in the foregoing embodiments, or another step performed by the sending device in the foregoing embodiments.

In another embodiment of this application, a computer-readable storage medium is further provided. The computer readable storage medium stores a computer-executable instruction, and when at least one processor of the receiving device executes the computer-executable instruction, the receiving device performs S103, S105, S111, step S107, S108, and S109 (specifically may be S1091, S1092, S1093, S1094, S1095, and S1096), and S112, and another step performed by the receiving device in the foregoing embodiments.

In another embodiment of this application, a computer program product is further provided. The computer program product includes a computer-executable instruction, and the computer-executable instruction is stored in a computer-readable storage medium; and at least one processor of the sending device may read the computer-executable instruction from the computer-readable storage medium, and the at least one processor of the sending device executes the computer-executable instruction, so that the sending device is enabled to perform the foregoing steps S101, S106, S102, S104, and S110, or another step performed by the sending device in the foregoing embodiments.

In another embodiment of this application, a computer program product is provided. The computer program product includes a computer-executable instruction, and the computer-executable instruction is stored in a computer-readable storage medium; and at least one processor of the receiving device may read the computer-executable instructions from the computer-readable storage medium, and at least one processor of the receiving device executes the computer-executable instruction, so that the receiving device is enabled to perform S103, S105, S111, steps S107, S108, S109 (specifically may be S1091, S1092, S1093, S1094, S1095, and S1096), and S112 and another step performed by the receiving device in the foregoing embodiments.

In another embodiment of this application, a communications system is further provided. The network management system includes a sending device and a receiving device. A structure of the sending device is a structure shown in FIG. 10, FIG. 11, and FIG. 12, and a structure of the receiving device is a structure shown in FIG. 13, FIG. 14, and FIG. 15.

A person of ordinary skill in the art may be aware that, in combination with the examples of units and algorithm steps described in the embodiments disclosed in this specification, this application can be implemented by electronic hardware or a combination form of electronic hardware and computer software. Whether the functions are performed by using hardware or software depends on particular applications and design constraints of the technical solutions. Aperson skilled in the art may use different methods to implement the described functions for the particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in another manner. For example, the foregoing described apparatus embodiment is merely exemplary. For example, the unit division is merely logical function division and may be another division manner in actual implementation. For example, several units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on several network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, a compact disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending control information, comprising:
determining, by a sending device, control information, wherein
a resource set corresponding to the control information overlaps a first time-frequency resource, and when a type of the control information is a first control information type, the first time-frequency resource can be used to bear the control information; or
when a type of the control information is a first control information type, a search space corresponding to the control information overlaps a first time-frequency resource; or
the control information is used to indicate that a receiving device receives data on a second time-frequency resource, wherein the second time-frequency resource overlaps the first time-frequency resource, and the control information is further used to indicate that the first time-frequency resource bears the data; and
sending, by the sending device, the control information to the receiving device.

2. The method for sending control information according to claim 1, further comprising:
sending, by the sending device, first information to the receiving device, wherein the first information is used to indicate that the first time-frequency resource is a reserved resource, or the first information is used to indicate that the first time-frequency resource cannot be used to bear a signal, or
the first information is used to indicate that the first time-frequency resource does not need to be used to bear a signal sent to the receiving device, or
the first information is used to indicate that the first time-frequency resource does not need to be used to bear at least one of the data and the control information that are sent to the receiving device.

3. The method for sending control information according to claim 1 or 2, wherein the determining, by a sending device, control information further comprises:
that the resource set corresponding to the control information overlaps the first time-frequency resource, and when the type of the control information is a second control information type, the first time-frequency resource cannot be used to bear the control information; or
that when the type of the control information is a second control information type, the search space corresponding to the control information does not overlap the first time-frequency resource.

4. The method for sending control information according to any one of claims 1 to 3, wherein that the control information is further used to indicate that the first time-frequency resource bears the data comprises:
that the control information comprises indication information, wherein the indication information is used to indicate that the first time-frequency resource bears the data; or
that the control information implicitly indicates that the first time-frequency resource bears the data; or
that the control information indicates, by indicating the second time-frequency resource based on a first time domain unit, to the receiving device that the first time-frequency resource bears the data; or
that the control information indicates that the data is of a first data type, wherein the first data type is used to indicate that the first time-frequency resource bears the data, the control information indicates that the data is of the first data type, and the first time-frequency resource bears the data; or
that the control information is first-type control information, and the first time-frequency resource bears the data.

5. The method for sending control information according to claim 4, wherein the first data type is determined based on at least one of the following factors:
target transmission reliability of the data, a target transmission latency of the data, and a service type of the data.

6. The method for sending control information according to any one of claims 1 to 5, wherein the first control information type is determined based on at least one of the following factors:
a format of the control information, a time-frequency resource location of the control information, or a monitoring period type corresponding to the control information.

7. The method for sending control information according to any one of claims 1 to 6, wherein the control information is further used to indicate that the first time-frequency resource does not bear at least one of the data and the control information.

8. The method for sending control information according to claim 7, wherein the first time-frequency resource bears a zero power signal; or
the first time-frequency resource bears a reference signal sent to the receiving device.

9. The method for sending control information according to any one of claims 1 to 8, wherein the search space corresponding to the control information overlaps the first time-frequency resource, and the first time-frequency resource can be used to bear the control information.

10. The method for sending control information according to any one claims 1 to 9, further comprising:
determining, by the sending device, a time-frequency resource of the control information based on the first control information type.

11. The method for sending control information according to any one of claims 1 to 10, wherein the sending device sends the data to the receiving device on the second time-frequency resource.

12. The method for sending control information according to any one of claims 1 to 11, wherein the control information is further used to indicate that the receiving device sends uplink data on a third time-frequency resource.

13. A method for receiving control information, comprising:
receiving, by a receiving device, control information from a sending device, wherein
when a type of the control information is a first control information type, the receiving device determines that a first time-frequency resource can be used to bear the control information, wherein a resource set corresponding to the control information overlaps the first time-frequency resource; or
when a type of the control information is a first control information type, the receiving device determines that a search space corresponding to the control information overlaps a first time-frequency resource; or
the control information is used to indicate that the receiving device receives data on a second time-frequency resource, wherein the second time-frequency resource overlaps the first time-frequency resource, the control information is further used to indicate that the first time-frequency resource bears the data, and the receiving device receives data on the second time-frequency resource.

14. The method for receiving control information according to claim 13, further comprising:
receiving, by the receiving device, first information from the sending device, wherein
the first information is used to indicate that the first time-frequency resource is a reserved resource, or
the first information is used to indicate that the first time-frequency resource cannot be used to bear a signal, or
the first information is used to indicate that the first time-frequency resource does not need to be used to bear a signal sent to the receiving device, or
the first information is used to indicate that the first time-frequency resource does not need to be used to bear at least one of the data and the control information that are sent to the receiving device.

15. The method for receiving control information according to claim 13 or 14, further comprising:
when the type of the control information is a second control information type, determining, by the receiving device, that the first time-frequency resource cannot be used to bear the control information, wherein the resource set corresponding to the control information overlaps the first time-frequency resource; or
when the type of the control information is a second control information type, determining, by the receiving device, that the search space corresponding to the control information does not overlap the first time-frequency resource.

16. The method for receiving control information according to any one of claims 13 to 15, wherein that the control information is further used to indicate that the first time-frequency resource bears the data comprises:
that the control information comprises indication information, wherein the indication information is used to indicate that the first time-frequency resource bears the data; or
that the control information implicitly indicates that the first time-frequency resource bears the data.

17. The method for receiving control information according to any one of claims 13 to 16, further comprising:
when the second time-frequency resource is indicated based on a first time domain unit, determining, by the receiving device, that the first time-frequency resource bears the data; or
when the data is of a first data type, determining, by the receiving device, that the first time-frequency resource bears the data; or
when the control information is first-type control information, determining, by the receiving device, that the first time-frequency resource bears the data.

18. The method for receiving control information according to any one of claims 13 to 17, wherein the first data type is determined based on at least one of the following factors:
target transmission reliability of the data, a target transmission latency of the data, and a service type of the data.

19. The method for receiving control information according to any one of claims 13 to 18, wherein the first control information type is determined based on at least one of the following factors:
a format of the control information, a time-frequency resource location of the control information, or a monitoring period type corresponding to the control information.

20. The method for receiving control information according to any one of claims 13 to 19, wherein the control information is further used to indicate that the first time-frequency resource does not bear at least one of the data and the control information.

21. The method for receiving control information according to claim 20, wherein the first time-frequency resource bears a zero power signal; or
the first time-frequency resource bears a reference signal sent to the receiving device.

22. The method for receiving control information according to any one of claims 13 to 21, wherein when the type of the control information is the first control information type, the receiving device determines that the search space corresponding to the control information overlaps the first time-frequency resource, and further determines that the first time-frequency resource can be used to bear the control information.

23. The method for receiving control information according to any one of claims 13 to 22, further comprising:
when the control information is the first-type control information, determining, by the receiving device, a time-frequency resource comprised in the search space corresponding to the control information.

24. The method for receiving control information according to any one of claims 13 to 23, wherein the receiving device receives the data on the second time-frequency resource.

25. The method for receiving control information according to any one of claims 13 to 24, wherein the control information is further used to indicate that the receiving device sends uplink data on a third time-frequency resource, and the method further comprises:
sending, by the receiving device, uplink data to the sending device on the third time-frequency resource.

26. A sending device, comprising:
a determining unit, configured to determine control information, wherein
a resource set corresponding to the control information overlaps a first time-frequency resource, and when a type of the control information is a first control information type, the first time-frequency resource can be used to bear the control information; or
when a type of the control information is a first control information type, a search space corresponding to the control information overlaps a first time-frequency resource; or
the control information is used to indicate that a receiving device receives data on a second time-frequency resource, wherein the second time-frequency resource overlaps the first time-frequency resource, and the control information is further used to indicate that the first time-frequency resource bears the data; and
a sending unit, configured to send the control information to the receiving device.

27. The sending device according to claim 26, wherein the sending unit is further configured to send first information to the receiving device, wherein
the first information is used to indicate that the first time-frequency resource is a reserved resource, or
the first information is used to indicate that the first time-frequency resource cannot be used to bear a signal, or
the first information is used to indicate that the first time-frequency resource does not need to be used to bear a signal sent to the receiving device, or
the first information is used to indicate that the first time-frequency resource does not need to be used to bear at least one of the data and the control information that are sent to the receiving device.

28. The sending device according to claim 26 or 27, wherein
the resource set corresponding to the control information overlaps the first time-frequency resource, and when the type of the control information is a second control information type, the first time-frequency resource cannot be used to bear the control information; or
when the type of the control information is a second control information type, the search space corresponding to the control information does not overlap the first time-frequency resource.

29. The sending device according to any one of claims 26 to 28, wherein that the control information is further used to indicate that the first time-frequency resource bears the data comprises:
that the control information comprises indication information, wherein the indication information is used to indicate that the first time-frequency resource bears the data; or
that the control information implicitly indicates that the first time-frequency resource bears the data; or
that the control information indicates, by indicating the second time-frequency resource based on a first time domain unit, to the receiving device that the first time-frequency resource bears the data; or
that the control information indicates that the data is of a first data type, wherein the first data type is used to indicate that the first time-frequency resource bears the data.

30. The sending device according to claim 29, wherein the first data type is determined based on at least one of the following factors:
target transmission reliability of the data, a target transmission latency of the data, or a service type of the data.

31. The sending device according to any one of claims 26 to 30, wherein the first control information type is determined based on at least one of the following factors:
a format of the control information, a time-frequency resource location of the control information, or a monitoring period type corresponding to the control information.

32. The sending device according to any one of claims 26 to 31, wherein the control information is further used to indicate that the first time-frequency resource does not bear at least one of the data and the control information.

33. The sending device according to claim 32, wherein the first time-frequency resource bears a zero power signal; or
the first time-frequency resource bears a reference signal sent to the receiving device.

34. The sending device according to any one of claims 26 to 33, wherein the search space corresponding to the control information overlaps the first time-frequency resource, and the first time-frequency resource can be used to bear the control information.

35. The sending device according to any one of claims 26 to 34, wherein the determining unit is further configured to determine a time-frequency resource of the control information based on the first control information type.

36. The sending device according to any one of claims 26 to 35, wherein the sending unit is further configured to send the data to the receiving device on the second time-frequency resource.

37. The sending device according to any one of claims 26 to 36, wherein the control information is further used to indicate that the receiving device sends uplink data on a third time-frequency resource.

38. A receiving device, comprising:
a receiving unit, configured to receive control information from a sending device, wherein
the receiving device further comprises a determining unit, wherein when a type of the control information is a first control information type, the determining unit is configured to determine that a first time-frequency resource can be used to bear the control information, wherein a resource set corresponding to the control information overlaps the first time-frequency resource; or
the receiving device further comprises a determining unit, wherein when a type of the control information is a first control information type, the determining unit is configured to determine that a search space corresponding to the control information overlaps a first time-frequency resource; or
the control information is used to indicate that the receiving device receives data on a second time-frequency resource, wherein the second time-frequency resource overlaps the first time-frequency resource, the control information is further used to indicate that the first time-frequency resource bears the data, and the receiving unit is further configured to receive the data on the second time-frequency resource.

39. The receiving device according to claim 38, wherein the receiving unit is further configured to receive first information from the sending device, wherein
the first information is used to indicate that the first time-frequency resource is a reserved resource, or
the first information is used to indicate that the first time-frequency resource cannot be used to bear a signal, or
the first information is used to indicate that the first time-frequency resource does not need to be used to bear a signal sent to the receiving device, or
the first information is used to indicate that the first time-frequency resource does not need to be used to bear at least one of the data and the control information that are sent to the receiving device.

40. The receiving device according to claim 38 or 39, comprising:
when the type of the control information is a second control information type, the determining unit is further configured to determine that the first time-frequency resource cannot be used to bear the control information, wherein the resource set corresponding to the control information overlaps the first time-frequency resource; or
when the type of the control information is a second control information type, the determining unit is further configured to determine that the search space corresponding to the control information does not overlap the first time-frequency resource.

41. The receiving device according to any one of claims 38 to 40, wherein that the control information is further used to indicate that the first time-frequency resource bears the data comprises:
that the control information comprises indication information, wherein the indication information is used to indicate that the first time-frequency resource bears the data; or
that the control information implicitly indicates that the first time-frequency resource bears the data; or
that the control information determines, by determining the second time-frequency resource based on a first time domain unit, that the first time-frequency resource bears the data.

42. The receiving device according to any one of claims 38 to 41, wherein
when the control information indicates that the data is of a first data type, the determining unit is further configured to determine that the first time-frequency resource bears the data, wherein the first data type is used to indicate that the first time-frequency resource bears the data; or
when the data is of a first data type, the determining unit is further configured to determine that the first time-frequency resource bears the data; or
when the second time-frequency resource is indicated based on the first time domain unit, and the second time-frequency resource is indicated based on the first time domain unit, the determining unit is further configured to determine that the first time-frequency resource bears the data; or
when the control information is first-type control information, the receiving unit is further configured to determine that the first time-frequency resource bears the data.

43. The receiving device according to any one of claims 38 to 42, wherein the first data type is determined based on at least one of the following factors:
target transmission reliability of the data, a target transmission latency of the data, and a service type of the data.

44. The receiving device according to any one of claims 38 to 43, wherein the first control information type is determined based on at least one of the following factors:
a format of the control information, a time-frequency resource location of the control information, or a monitoring period type corresponding to the control information.

45. The receiving device according to any one of claims 38 to 44, wherein the control information is further used to indicate that the first time-frequency resource does not bear at least one of the data and the control information.

46. The receiving device according to claim 45, wherein the first time-frequency resource bears a zero power signal; or
the first time-frequency resource bears a reference signal sent to the receiving device.

47. The receiving device according to any one of claims 38 to 46, wherein when the type of the control information is the first control information type, the determining unit is further configured to determine that the search space corresponding to the control information overlaps the first time-frequency resource, and further determines that the first time-frequency resource can be used to bear the control information.

48. The receiving device according to any one of claims 38 to 47, wherein the determining unit is specifically configured to: when determining that the control information is the first control information type, determine a time-frequency resource comprised in the search space corresponding to the control information.

49. The receiving device according to any one of claims 38 to 48, wherein the receiving unit is further configured to receive the data on the second time-frequency resource.

50. The receiving device according to any one of claims 38 to 49, wherein the control information is further used to indicate that the receiving device sends uplink data on a third time-frequency resource, and the receiving device further comprises:
a sending unit, configured to send the uplink data to the sending device on the third time-frequency resource.

51. A computer-readable storage medium storing a computer program, wherein when run on a computer, the program enables the computer to perform the method for sending control information according to any one of claims 1 to 12, or perform the method for receiving control information according to any one of claims 13 to 25.

52. A computer program product comprising an instruction, wherein the computer program product stores the instruction, and when run on a computer, the instruction enables the computer to perform the method for sending control information according to any one of claims 1 to 12, or perform the method for receiving control information according to any one of claims 13 to 25.

53. A communications apparatus, comprising: a processor, wherein the processor is coupled to a memory, the memory is configured to store a computer program or an instruction, the processor is configured to execute the computer program or the instruction in the memory, to enable the communications apparatus to perform the method for sending control information according to any one of claims 1 to 12, or perform the method for receiving control information according to any one of claims 13 to 25.
